(19) Europäisches Patentamt
European Patent Office
Office européen des brevets

(11) EP 1 483 316 B1

(12) **EUROPÄISCHE PATENTSCHRIFT**

(45) Veröffentlichungstag und Bekanntmachung des Hinweises auf die Patenterteilung:
**19.09.2007 Patentblatt 2007/38**

(21) Anmeldenummer: **03743390.1**

(22) Anmeldetag: **04.03.2003**

(51) Int Cl.:
***C08J 7/16*** *(2006.01)* ***H01M 8/10*** *(2006.01)*
***C08J 5/22*** *(2006.01)*

(86) Internationale Anmeldenummer:
**PCT/EP2003/002397**

(87) Internationale Veröffentlichungsnummer:
**WO 2003/074597 (12.09.2003 Gazette 2003/37)**

(54) **PROTONENLEITENDE ELEKTROLYTMEMBRAN MIT GERINGER METHANOLDURCHLÄ SSIGKEIT UND DEREN ANWENDUNG IN BRENNSTOFFZELLEN**

PROTON CONDUCTING ELECTROLYTE MEMBRANE HAVING REDUCED METHANOL PERMEABILITY AND THE USE THEREOF IN FUEL CELLS

MEMBRANE ELECTROLYTIQUE CONDUCTRICE DE PROTONS A PERMEABILITE REDUITE AU METHANOL ET SON UTILISATION DANS DES PILES A COMBUSTIBLE

(84) Benannte Vertragsstaaten:
**AT BE BG CH CY CZ DE DK EE ES FI FR GB GR HU IE IT LI LU MC NL PT RO SE SI SK TR**

(30) Priorität: **06.03.2002 DE 10209685**
**11.03.2002 DE 10210499**

(43) Veröffentlichungstag der Anmeldung:
**08.12.2004 Patentblatt 2004/50**

(73) Patentinhaber: **Pemeas GmbH**
**65926 Frankfurt am Main (DE)**

(72) Erfinder:
- **KIEFER, Joachim**
  **66679 Losheim am See (DE)**
- **UENSAL, Oemer**
  **55128 Mainz (DE)**
- **CALUNDANN, Gordon**
  **North Plainfield, NJ 07060 (US)**
- **CRIVELLO, James**
  **Clifton Park, NY 12065 (US)**

(74) Vertreter: **Luderschmidt, Schüler & Partner**
**Patentanwälte**
**Industriepark Höchst,**
**Gebäude F 821**
**65926 Frankfurt (DE)**

(56) Entgegenhaltungen:
**EP-A- 0 893 165** **WO-A-00/54351**
**US-A- 4 187 333** **US-A- 6 096 369**

- **PATENT ABSTRACTS OF JAPAN vol. 002, no. 131 (C-026), 31. Oktober 1978 (1978-10-31) & JP 53 097988 A (TOYO SODA MFG CO LTD), 26. August 1978 (1978-08-26)**

EP 1 483 316 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft eine protonenleitende Elektrolytmembran mit geringer Methanoldurchlässigkeit auf Basis von Polyvinylsulfonsäure, die aufgrund ihrer hervorragenden chemischen Eigenschaften vielfältig eingesetzt werden kann und sich insbesondere als Polymer-Elektrolyt-Membran (PEM) in sogenannten PEM-Brennstoffzellen eignet.

Eine Brennstoffzelle enthält üblicherweise einen Elektrolyten und zwei durch den Elektrolyten getrennte Elektroden. Im Fall einer Brennstoffzelle wird einer der beiden Elektroden ein Brennstoff, wie Wasserstoffgas oder ein Methanol-Wasser-Gemisch, und der anderen Elektrode ein Oxidationsmittel, wie Sauerstoffgas oder Luft, zugeführt und dadurch chemische Energie aus der Brennstoffoxidation direkt in elektrische Energie umgewandelt. Bei der Oxidationsreaktion werden Protonen und Elektronen gebildet.

Der Elektrolyt ist für Wasserstoffionen, d.h. Protonen, aber nicht für reaktive Brennstoffe wie das Wasserstoffgas oder Methanol und das Sauerstoffgas durchlässig.

Eine Brennstoffzelle weist in der Regel mehrere Einzelzellen sogenannte MEE's (Membran-Elektroden-Einheit) auf, die jeweils einen Elektrolyten und zwei durch den Elektrolyten getrennte Elektroden enthalten.

Als Elektrolyt für die Brennstoffzelle kommen Feststoffe wie Polymerelektrolytmembranen oder Flüssigkeiten wie Phosphorsäure zur Anwendung. In jüngster Zeit haben Polymerelektrolytmembranen als Elektrolyte für Brennstoffzellen Aufmerksamkeit erregt. Prinzipiell kann man zwischen 2 Kategorien von Polymermembranen unterscheiden.

Zu der ersten Kategorie gehören Kationenaustauschermembranen bestehend aus einem Polymergerüst, welches kovalent gebunden Säuregruppen, bevorzugt Sulfonsäuregruppen enthält. Die Sulfonsäuregruppe geht unter Abgabe eines Wasserstoffions in ein Anion über und leitet daher Protonen. Die Beweglichkeit des Protons und damit die Protonenleitfähigkeit ist dabei direkt an den Wassergehalt verknüpft. Durch die sehr gute Mischbarkeit von Methanol und Wasser weisen solche Kationenaustauschermembranen eine hohe Methanolpermeabilität auf und sind deshalb für Anwendungen in einer Direkt-Methanol-Brennstoffzelle ungeeignet. Trocknet die Membran, z.B. in Folge hoher Temperatur, aus, so nimmt die Leitfähigkeit der Membran und folglich die Leistung der Brennstoffzelle drastisch ab. Die Betriebstemperaturen von Brennstoffzellen enthaltend solche Kationenaustauschermembranen ist somit auf die Siedetemperatur des Wassers beschränkt. Die Befeuchtung der Brennstoffe stellt eine grosse technische Herausforderung für den Einsatz von Polymerelektrolytmembranbrennstoffzellen (PEMBZ) dar, bei denen konventielle, sulfonierte Membranen wie z.B. Nafion verwendet werden.

So verwendet man als Materialien für Polymerelektrolytmembranen beispielsweise Perfluorsulfonsäurepolymere. Das Perfluorsulfonsäurepolymer (wie z.B. Nafion) weist im allgemeinen ein Perfluorkohlenwasserstofigerüst auf, wie ein Copolymer aus Tetrafluorethylen und Trifluorvinyl, und eine daran gebundene Seitenkette mit einer Sulfonsäuregruppe, wie eine Seitenkette mit einer an eine Perfluoralkylengruppe gebundenen Sulfonsäuregruppe.

Bei den Kationenaustauschermembranen handelt es sich vorzugsweise um organische Polymere mit kovalent gebundenen Säuregruppen, insbesondere Sulfonsäure. Verfahren zur Sulfonierung von Polymeren sind in F. Kucera et. al. Polymer Engineering and Science1988, Vol. 38, No 5, 783-792 beschrieben.

Im Folgenden sind die wichtigsten Typen von Kationenaustauschmembranen aufgeführt die zum Einsatz in Brennstoffzellen kommerzielle Bedeutung erlangt haben.

Der wichtigste Vertreter ist das Perfluorosulfonsäurepolymer Nafion® (US 3692569). Dieses Polymer kann wie in US 4453991 beschrieben in Lösung gebracht und dann als lonomer eingesetzt werden. Kationenaustauschermembranen werden auch erhalten durch Füllen eines porösen Trägermaterials mit einem solchen lonomer. Als Trägermaterial wird dabei expandiertes Teflon bevorzugt (US 5635041).

Eine weitere perfluorinierte Kationenaustauschermembran kann wie in US5422411 beschrieben durch Copolymerisation aus Trifluorostyrol und sulfonylmodifiziertem Trifuorostyrol hergestellt werden. Kompositmembranen bestehend aus einem porösen Trägermaterial, insbesondere expandiertes Teflon, gefüllt mit Ionomeren bestehend aus solchen sulfonylmodifizierten Trifluorostyroi-Copolymeren sind in US5834523 beschrieben.

US6110616 beschreibt Copolymere aus Butadien und Styrol und deren anschliesende Sulfonierung zur Herstellung von Kationenaustauschermembranen für Brennstoffzellen.

Eine weitere Klasse von teilfluorierten Kationenaustauschermembranen kann durch Strahlenpfropfen und nachfolgende Sulfonierung hergestellt werden. Dabei wird, wie in EP667983 oder DE19844645 beschrieben, an einem zuvor bestrahlten Polymerfilm eine Pfropfungsreaktion vorzugsweise mit Styrol durchgeführt. In einer nachfolgenden Sulfonierungsreaktion erfolgt dann die Sulfonierung der Seitenketten. Gleichzeitig mit der Pfropfung kann auch eine Vernetzung durchgeführt und somit die mechanischen Eigenschaften verändert werden.

Neben obigen Membranen wurde eine weitere Klasse nichtfluorierter Membranen durch Sulfonierung von hochtemperaturstabilen Thermoplasten entwickelt. So sind Membranen aus sulfonierten Polyetherketonen (DE4219077, EP96/01177), sulfoniertem Polysulfon (J. Membr. Sci. 83 (1993) p.211) oder sulfoniertem Polyphenylensulfid (DE19527435) bekannt.

Ionomere hergestellt aus sulfonierten Polyetherketonen sind in WO 00/15691 beschrieben.

Desweiteren sind Säure-Base-Blendmembranen bekannt, die wie in DE19817374 oder WO 01/18894 beschrieben durch Mischungen von sulfonierten Polymeren und basischen Polymeren hergestellt werden.

Zur weiteren Verbesserung der Membraneigenschaften kann eine aus dem Stand der Technik bekannte Kationenaustauschermembran mit einem hochtemperaturstabilen Polymer gemischt werden. Die Herstellung und Eigenschaften von Kationenaustauschermembranen bestehend aus Blends aus sulfoniertem PEK und a) Polysulfonen (DE4422158), b) aromatischen Polyamiden (42445264) oder c) Polybenzimidazol (DE19851498) sind beschrieben.

Nachteil all dieser Kationenaustauschermembranen ist die Tatsache, dass die Membran befeuchtet werden muss, die Betriebstemperatur auf 100°C beschränkt ist, und die Membranen eine hohe Methanolpermeabilität aufweisen. Ursache für diese Nachteile ist der Leitfähigkeitsmechanismus der Membran, bei der der Transport der Protonen an den Transport des Wassermoleküls gekoppelt ist. Dies bezeichnet man als "Vehicle-Mechanismus" (K.-D. Kreuer, Chem. Mater. 1996, 8, 610-641).

Als zweite Kategorie sind Polymerelektrolytmembranen mit Komplexen aus basischen Polymeren und starken Säuren entwickelt worden. So beschreibt WO96/13872 und die korrespondierende US-PS 5,525,436 ein Verfahren zur Herstellung einer protonenleitenden Polymerelektrolytmembranen, bei dem ein basisches Polymer, wie Polybenzimidazol, mit einer starken Säure, wie Phosphorsäure, Schwefelsäure usw., behandelt wird.

In J. Electrochem. Soc., Band 142, Nr. 7, 1995, S. L121-L123 wird die Dotierung eines Polybenzimidazols in Phosphorsäure beschrieben.

Bei den im Stand der Technik bekannten basischen Polymermembranen wird diezum Erzielen der erforderlichen Protonenleitfähigkeit- eingesetzte Mineralsäure (meist konzentrierte Phosphorsäure) entweder nach der Formgebung eingesetzt oder alternativ dazu die basische Polymermembran direkt aus Polyphosphorsäure wie in der deutschen Patentanmeldung Nr. 10117686.4, Nr. 10144815.5 und Nr. 10117687.2 hergestellt. Das Polymer dient dabei als Träger für den Elektrolyten bestehend aus der hochkonzentrierten Phosphorsäure, respektive Polyphosphorsäure. Die Polymermembran erfüllt dabei weitere wesentliche Funktionen insbesondere muss sie eine hohe mechanische Stabilität aufweisen und als Separator für die beiden eingangs genannten Brennstoffe dienen.

Wesentliche Vorteile einer solchen Phosphorsäure oder Polyphosphorsäure dotierten Membran ist die Tatsache, dass eine Brennstoffzelle, bei der eine derartige Polymerelektrolytmembran eingesetzt wird, bei Temperaturen oberhalb 100°C ohne eine sonst notwendige Befeuchtung der Brennstoffe betrieben werden kann. Dies liegt in der Eigenschaft der Phosphorsäure begründet die Protonen ohne zusätzliches Wasser mittels des sog. Grotthus Mechanismus transportieren zu können (K.-D. Kreuer, Chem. Mater. 1996, 8, 610-641).

Durch die Möglichkeit des Betriebes bei Temperaturen oberhalb 100°C ergeben sich weitere Vorteile für das Brennstoffizellensystem. Zum Einen wird die Empfindlichkeit des Pt-Katalysators gegenüber Gasverunreinigungen, insbesondere CO, stark verringert. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise muss der CO-Gehalt des Brennstoffes bei Temperaturen <100°C kleiner als 100 ppm sein. Bei Temperaturen im Bereich 150-200°C können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Ein grosser Vorteil von Brennstoffzellen ist die Tatsache, dass bei der elektrochemischen Reaktion die Energie des Brennstoffes direkt in elektrische Energie und Wärme umgewandelt wird. Als Reakionsprodukt entsteht dabei an der Kathode Wasser. Als Nebenprodukt bei der elektrochemischen Reaktion entsteht also Wärme. Für Anwendungen bei denen nur der Strom zum Antrieb von Elektromotoren genutzt wird, wie z.B. für Automobilanwendungen, oder als vielfältiger Ersatz von Batteriesystemen muss die Wärme abgeführt werden, um ein Überhitzen des Systems zu vermeiden. Für die Kühlung werden dann zusätzliche, Energie verbrauchende Geräte notwendig, die den elektrischen Gesamt-Wirkungsgrad der Brennstoffzelle weiter verringern. Für stationäre Anwendungen wie zur zentralen oder dezentralen Erzeugung von Strom und Wärme lässt sich die Wärme effizient durch vorhandene Technologien wie z.B. Wärmetauscher nutzen. Zur Steigerung der Effizienz werden dabei hohe Temperaturen angestrebt. Liegt die Betriebstemperatur oberhalb 100°C und ist die Temperaturdifferenz zwischen der Umgebungstemperatur und der Betriebstemperatur groß, so wird es möglich das Brennstoffzellensystem effizienter zu kühlen beziehungsweise kleine Kühlflächen zu verwenden und auf zusätzliche Geräte zu verzichten im Vergleich zu Brennstoffzellen, die aufgrund der Membranbefeuchtung bei unter 100°C betrieben werden müssen.

Neben diesen Vorteilen weist ein solches Brennstoffzellensystem einen entscheidenden Nachteil auf. So liegt Phosphorsäure oder Polyphosphorsäure als Elektrolyt vor, die durch ionische Wechselwirkungen nicht permanent an das basische Polymer gebunden ist und durch Wasser ausgewaschen werden kann. Wasser wird wie oben beschrieben bei der elektrochemischen Reaktion an der Kathode gebildet. Liegt die Betriebstemperatur oberhalb 100°C so wird das Wasser zum Grossteil als Dampf durch die Gasdiffusionselektrode abgeführt und der Säureverlust ist sehr gering. Fällt die Betriebstemperatur jedoch unter 100°C, z.B. beim An- und Abfahren der Zelle oder in Teillastbetrieb wenn eine hohe Stromausbeute angestrebt wird, so kondensiert das gebildete Wasser und kann zu einem verstärkten Auswaschen des

Elektrolyten, hochkonzentrierte Phosphorsäure oder Polyphosphorsäure, führen. Dies kann bei der vorstehend beschriebenen Fahrweise der Brennstoffzelle zu einem stetigen Verlust der Leitfähigkeit und Zellleistung führen, welche die Lebensdauer der Brennstoffzelle vermindern kann.

Weiterhin können die bekannten mit Phosphorsäure dotierten Membranen nicht in der sogenannten Direkt-Methanol-Brennstoffzelle (DMBZ) eingesetzt werden. Derartige Zellen sind jedoch von besonderem Interesse, da ein Methanol-Wasser-Gemisch als Brennstoff eingesetzt wird. Wird eine bekannte Membran auf Basis von Phosphorsäure verwendet, so versagt die Brennstoffzelle nach einer recht kurzen Zeit.

Der vorliegenden Erfindung liegt daher die Aufgabe zugrunde, eine neuartige Polymerelektrolytmembran bereitzustellen, bei der ein Auswaschen des Elektrolyten verhindert wird. Eine Brennstoffzelle enthaltend eine erfindungsgemässe Polymerelektrolytmembran soll sich eignen für reinen Wasserstoff sowie für zahlreiche kohlenstoffhaltige Brennstoffe insbesondere Erdgas, Benzin, Methanol und Biomasse.

Des weiteren soll eine erfindungsgemäße Membran kostengünstig und einfach hergestellt werden können. Darüber hinaus war es mithin Aufgabe der vorliegenden Erfindung Polymerelektrolytmembranen zu schaffen, die eine hohe Leistungsfähigkeit, insbesondere eine hohe Leitfähigkeit zeigen.

Des weiteren sollte eine Polymerelektrolytmembran geschaffen werden, die eine hohe mechanische Stabilität, beispielsweise einen hohen E-Modul, eine hohe Reißfestigkeit, ein geringes Kriechen und eine hohe Bruchzähigkeit aufweist.

Darüber hinaus war es mithin Aufgabe der vorliegenden Erfindung eine Membran zur Verfügung zu stellen, die auch im Betrieb eine geringe Durchlässigkeit gegen die verschiedensten Brennstoffe, wie beispielsweise Wasserstoff oder Methanol aufweist, wobei diese Membran auch eine geringe Sauerstoffpermeabilität zeigen sollte.

Gelöst werden diese Aufgaben durch die Herstellung einer Vinylhaltigen Sulfonsäure umfassenden Flüssigkeit und ein Verfahren zur Herstellung einer Polymerelektrolytmembran durch Quellen eines Filmes aus einem Polymer in dieser Flüssigkeit, und anschliessende Polymerisation zu einer Polyvinylsulfonsäure. Eine erfindungsgemässe Polymerelektrolytmembran besitzt eine sehr geringe Methanolpermeabilität und eignet sich insbesondere für den Einsatz in einer DMBZ. Somit ist ein dauerhafter Betrieb einer Brennstoffzelle mit einer Vielzahl von Brennstoffen wie Wasserstoff, Erdgas, Benzin, Methanol oder Biomasse möglich. Hierbei ermöglichen die Membranen eine besonders hohe Aktivität dieser Brennstoffe. Bedingt durch die hohen Temperaturen kann die Methanoloxidation hierbei mit hoher Aktivität erfolgen.

Darüber hinaus zeigen Membranen der vorliegenden Erfindung eine hohe mechanische Stabilität, insbesondere einen hohen E-Modul, eine hohe Reißfestigkeit, ein geringes Kriechen und eine hohe Bruchzähigkeit. Des weiteren zeigen diese Membranen eine überraschend lange Lebensdauer.

Gegenstand der vorliegenden Erfindung ist daher eine stabile protonenleitende Elektrolytmembran erhältlich durch ein Verfahren umfassend die Schritte

A) Quellen einer Polymerfolie mit einer Vinylhaltigen Sulfonsäure umfassenden Flüssigkeit und
B) Polymerisation der in Schritt A) eingebrachten Flüssigkeit vorhandenen Vinylhaltigen Sulfonsäure.

Bei der in Schritt A) eingesetzten Polymerfolie handelt es sich um eine Folie die eine Quellung von mindestens 3 % in der Vinylsulfonsäurehaltigen Flüssigkeit aufweist. Als Quellung wird eine Gewichtszunahme der Folie von mindestens 3 Gew.-% verstanden. Bevorzugt beträgt die Quellung mindestens 5 %, besonders bevorzugt mindestens 10%.

Bestimmung der Quellung Q wird gravimetrisch bestimmt aus der Masse des Filmes vor der Quellung $m_o$ und der Masse des Filmes nach der Polymerisation gemäß Schritt B), $m_2$.

$$Q = (m_2 - m_0)/m_0 \times 100$$

Die Quellung erfolgt vorzugsweise bei einer Temperatur oberhalb 0°C, insbesondere zwischen Raumtemperatur (20°C) und 180°C in einer vinylsulfonsäurehaltigen Flüssigkeit, die mindestens 5 Gew.-% Vinylsulfonsäure enthält. Des weiteren kann die Quellung auch bei erhöhtem Druck durchgeführt werden. Hierbei ergeben sich die Grenzen aus wirtschaftlichen Überlegungen und technischen Möglichkeiten.

Die zur Quellung eingesetzte Polymerfolie weist im allgemeinen eine Dicke im Bereich von 5 bis 3000μm, vorzugsweise 10 bis 1500 μm und besonders bevorzugt auf. Die Herstellung derartiger Folien aus Polymeren ist im allgemeinen bekannt, wobei diese teilweise kommerziell erhältlich sind. Der Begriff Polymerfolie bedeutet, dass die zum Quellen einzusetzende Folie Polymere umfasst, wobei diese Folie weitere allgemein übliche Additive enthalten kann.

Zu den bevorzugten Polymeren gehören unter anderem Polyolefine, wie Poly(chloropren), Polyacetylen, Polyphenylen, Poly(*p*-xylylen), Polyarylmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin,

Polyvinylchlorid, Polyvinylidenchlorid, Polytetrafluorethylen, Polyhexafluorpropylen, Copolymere von PTFE mit Hexafluoropropylen, mit Perfluorpropylvinylether, mit Trifluoronitrosomethan, mit Carbalkoxy-perfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbornen; Polymere mit C-O-Bindungen in der Hauptkette, beispielsweise
Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat;
Polymere C-S-Bindungen in der Hauptkette, beispielsweise Polysulfidether, Polyphenylensulfid, Polyethersulfon;
Polymere C-N-Bindungen in der Hauptkette, beispielsweise
Polyimine, Polyisocyanide,Polyetherimin, Polyetherimide, Polyanilin, Polyaramide, Polyamide, Polyhydrazide, Polyurethane, Polyimide, Polyazole, Polyazoletherketon, Polyazine;
Flüssigkristalline Polymere, insbesondere Vectra sowie
Anorganische Polymere, beispielsweise Polysilane, Polycarbosilane, Polysiloxane, Polykieselsäure, Polysilikate, Silicone, Polyphosphazene und Polythiazyl.

Gemäß einem besonderen Aspekt der vorliegenden Erfindung werden hochtemperaturstabile Polymere eingesetzt, die mindestens ein Stickstoff-, Sauerstoff- und/oder Schwefelatom in einer oder in unterschiedlichen Wiederholungseinheit enthalten.

Hochtemperaturstabil im Sinne der vorliegenden Erfindung ist ein Polymer, welches als Polymerer Elektrolyt in einer Brennstoffzelle bei Temperaturen oberhalb 120°C dauerhaft betrieben werden kann. Dauerhaft bedeutet, dass eine erfindungsgemäße Membran mindestens 100 Stunden, vorzugsweise mindestens 500 Stunden bei mindestens 120°C, vorzugsweise mindestens 160°C betrieben werden kann, ohne dass die Leistung, die gemäß der in WO 01/18894 A2 beschriebenen Methode gemessen werden kann, um mehr als 50%, bezogen auf die Anfangsleistung abnimmt.

Bei den in Schritt A) eingesetzten Polymeren handelt es sich vorzugsweise um Polymere, die eine Glasübergangstemperatur oder Vicat-Erweichungstemperatur VST/A/50 von mindestens 100°C, bevorzugt mindestens 150°C und ganz besonders bevorzugt mindestens 180°C haben.

Besonders bevorzugt sind Polymere die mindestens ein Stickstoffatom in einer Wiederholungseinheit enthalten. Insbesondere bevorzugt sind Polymere, die mindestens einen aromatischen Ring mit mindestens einem Stickstoffheteroatom pro Wiederholungseinheit enthalten. Innerhalb dieser Gruppe sind insbesondere Polymere auf Basis von Polyazolen bevorzugt. Diese basischen Polyazol-Polymere enthalten mindestens einen aromatischen Ring mit mindestens einem Stickstoffheteroatom pro Wiederholungseinheit.

Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Polymere auf Basis von Polyazol enthalten wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII)

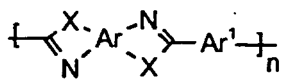
(I)

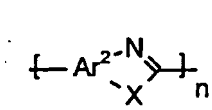
(II)

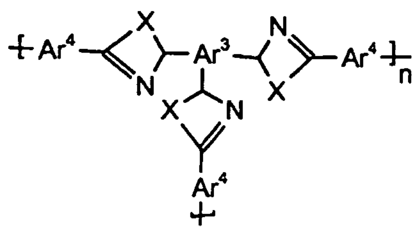
(III)

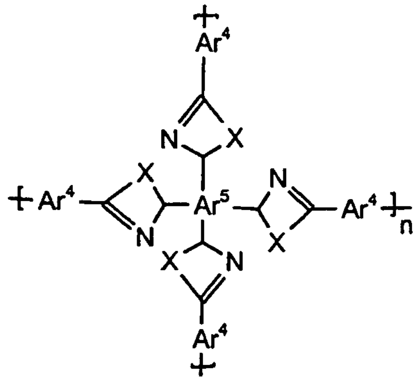

(IV)

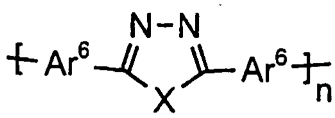

(V)

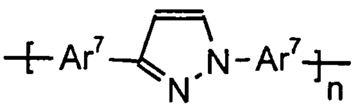

(VI)

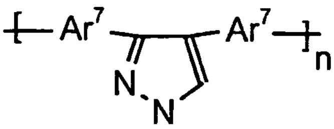

(VII)

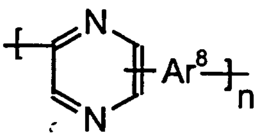

(VIII)

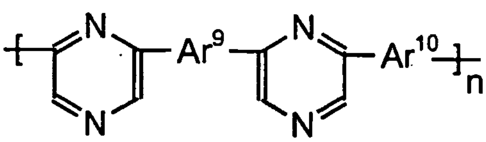

(IX)

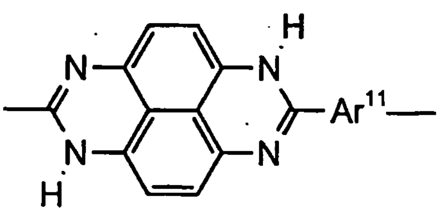

(X)

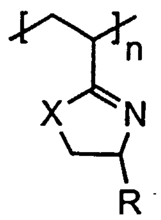

(XI)

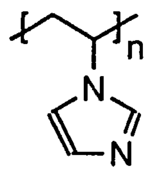

(XII)

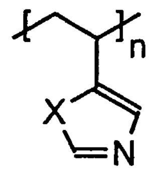

(XIII)

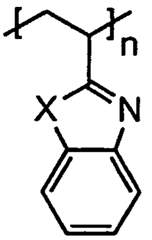

(XIV)

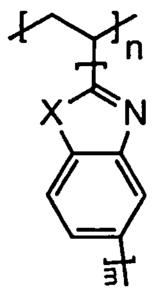

(XV)

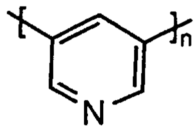

(XVI)

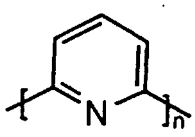

(XVII)

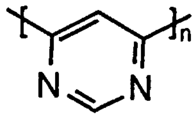

(XVIII)

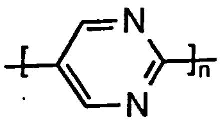

(XIX)

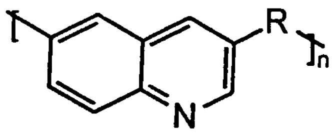

(XX)

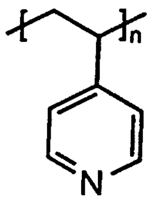

(XXI)

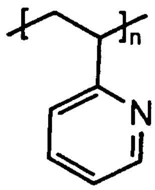

(XXII)

worin

- Ar gleich oder verschieden sind und für eine vierbindige aromatische oder heteroaromatische Gruppe, die ein- oder mehrkernig sein kann,
- $Ar^1$ gleich oder verschieden sind und für eine zweibindige aromatische oder heteroaromatische Gruppe, die ein- oder mehrkernig sein kann,
- $Ar^2$ gleich oder verschieden sind und für eine zwei oder dreibindige aromatische oder heteroaromatische Gruppe, die ein- oder mehrkernig sein kann,
- $Ar^3$ gleich oder verschieden sind und für eine dreibindige aromatische oder heteroaromatische Gruppe, die ein- oder mehrkernig sein kann,
- $Ar^4$ gleich oder verschieden sind und für eine dreibindige aromatische oder heteroaromatische Gruppe, die ein- oder mehrkernig sein kann,

| | |
|---|---|
| $Ar^5$ | gleich oder verschieden sind und für eine vierbindige aromatische oder heteroaromatische Gruppe, die ein- oder mehrkernig sein kann, |
| $Ar^6$ | gleich oder verschieden sind und für eine zweibindige aromatische oder heteroaromatische Gruppe, die ein- oder mehrkernig sein kann, |
| $Ar^7$ | gleich oder verschieden sind und für eine zweibindige aromatische oder heteroaromatische Gruppe, die ein- oder mehrkernig sein kann, |
| $Ar^8$ | gleich oder verschieden sind und für eine dreibindige aromatische oder heteroaromatische Gruppe, die ein- oder mehrkernig sein kann, |
| $Ar^9$ | gleich oder verschieden sind und für eine zwei- oder drei- oder vierbindige aromatische oder heteroaromatische Gruppe, die ein- oder mehrkernig sein kann, |
| $Ar^{10}$ | gleich oder verschieden sind und für eine zwei- oder dreibindige aromatische oder heteroaromatische Gruppe, die ein- oder mehrkernig sein kann, |
| $Ar^{11}$ | gleich oder verschieden sind und für eine zweibindige aromatische oder heteroaromatische Gruppe, die ein- oder mehrkernig sein kann, |
| X | gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt |
| R | gleich oder verschieden für Wasserstoff, eine Alkylgruppe und eine aromatische Gruppe steht und |
| n, m | eine ganze Zahl größer gleich 10, bevorzugt größer gleich 100 ist. |

Erfindungsgemäß bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Dabei ist das Substitionsmuster von $Ar^1$, $Ar^4$, $Ar^6$, $Ar^7$, $Ar^8$, $Ar^9$, $Ar^{10}$, $Ar^{11}$ beliebig, im Falle vom Phenylen beispielsweise kann $Ar^1$, $Ar^4$, $Ar^6$, $Ar^7$, $Ar^8$, $Ar^9$, $Ar^{10}$, $Ar^{11}$ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben:

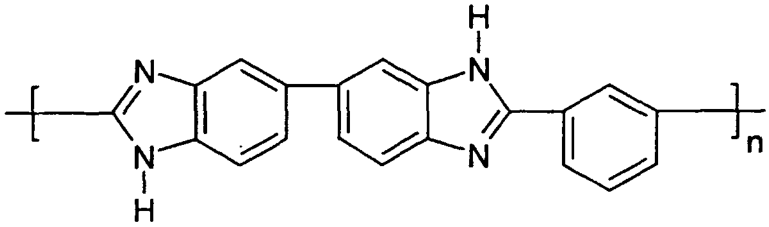

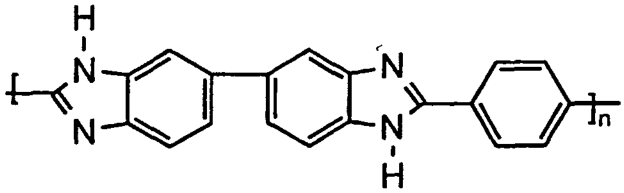

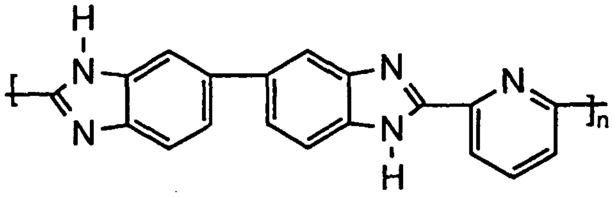

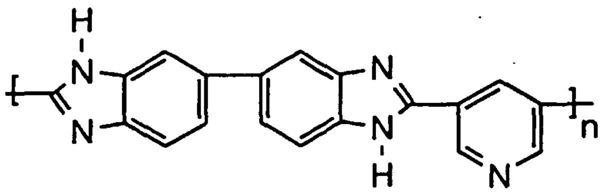

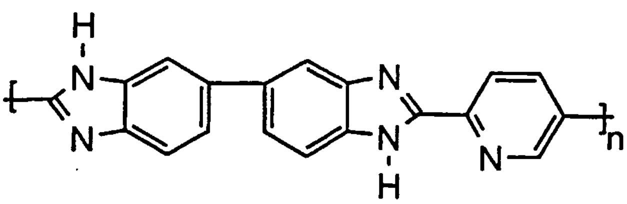

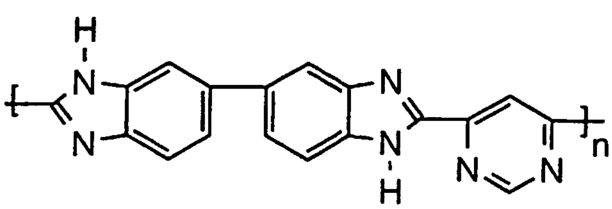

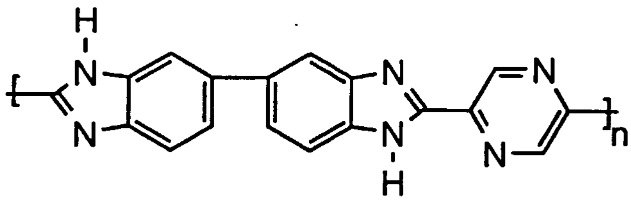

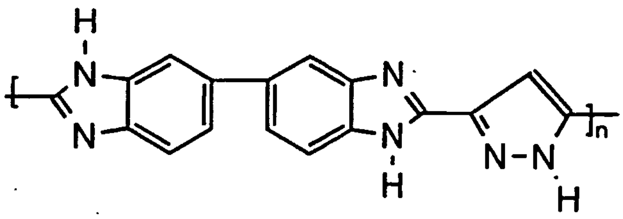

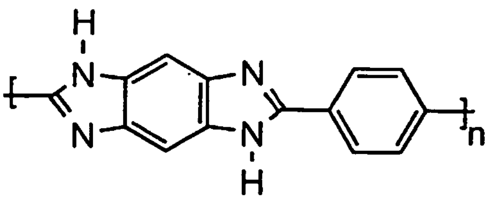

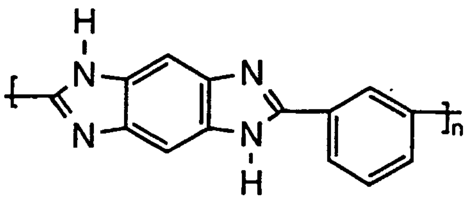

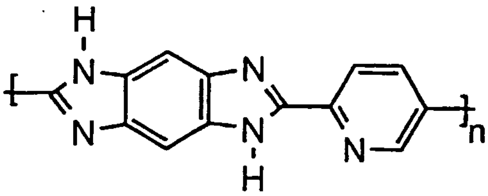

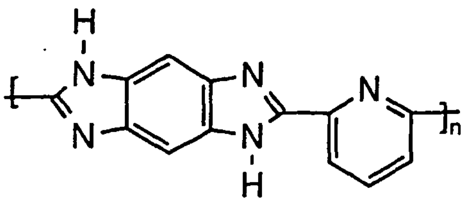

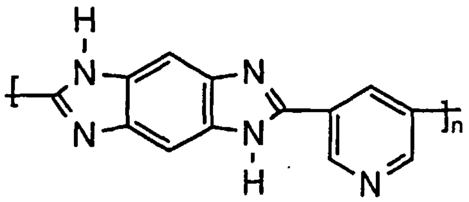

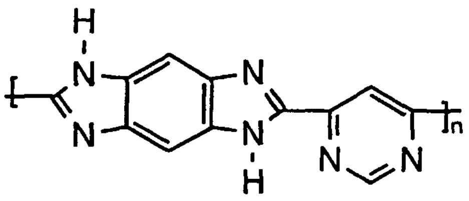

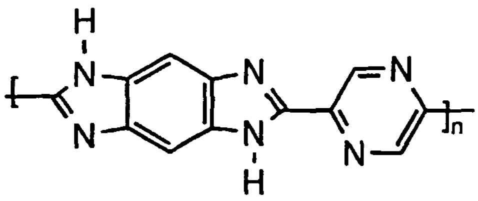

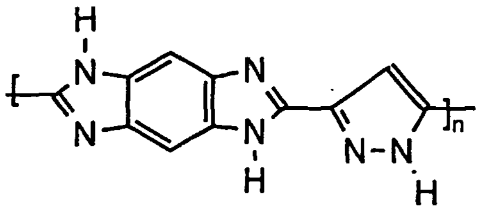

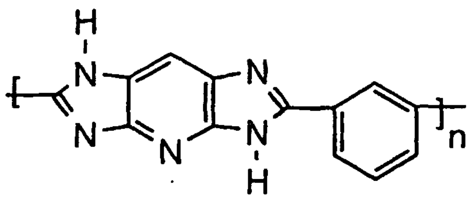

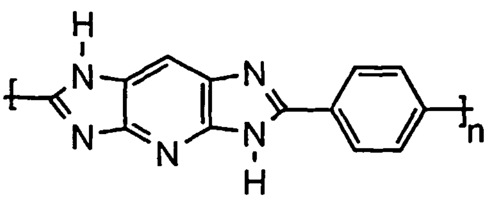

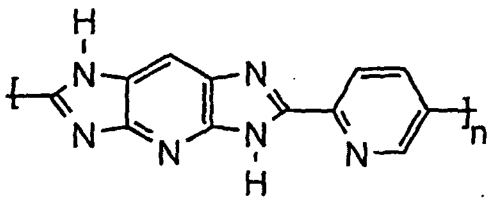

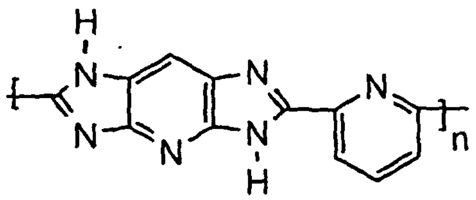

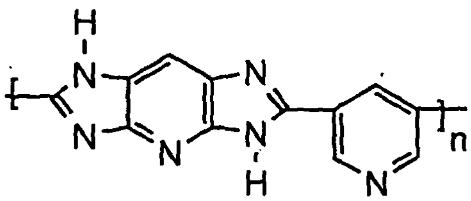

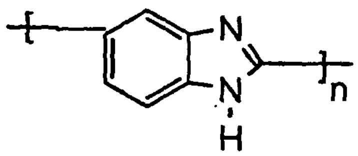

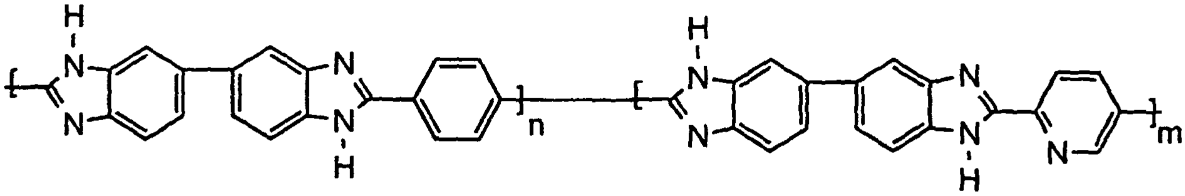

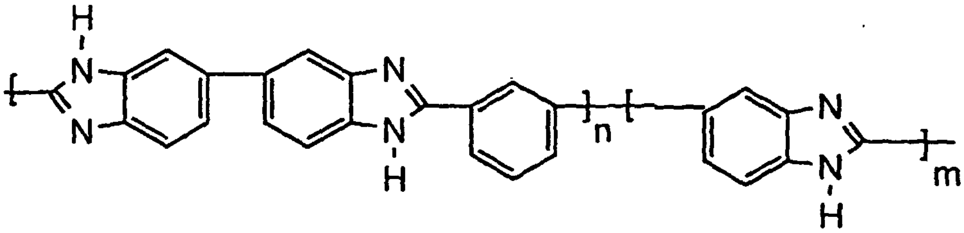

wobei n und m eine ganze Zahl größer gleich 10, vorzugsweise größer gleich 100 ist.

Die in Schritt A) eingesetzten Polyazole, insbesondere jedoch die Polybenzimidazole zeichnen sich durch ein hohes Molekulargewicht aus. Gemessen als Intrinsische Viskosität beträgt dieses vorzugsweise mindestens 0,2 dl/g, insbesondere 0,8 bis 10 dl/g, besonders bevorzugt 1 bis 5 dl/g.

Weitere bevorzugte Polyazol-Polymere sind Polyimidazole, Polybenzthiazole, Polybenzoxazole, Polytriazole, Polyoxadiazole, Polythiadiazole, Polypyrazole, Polyquinoxalines, Poly(pyridine), Poly(pyrimidine), und Poly(tetrazapyrene).

Besonders bevorzugt ist Celazole der Fa. Celanese, insbesondere ein solches bei dem das in der deutschen Patentanmeldung Nr. 10129458.1 beschriebene durch Sieben aufgearbeitete Polymer eingesetzt wird.

Darüber hinaus sind Polyazole bevorzugt, die gemäß der in der deutschen Patentanmeldung Nr. 10117687.2 beschriebenen Methoden erhalten wurden.

Zu den bevorzugten Polymeren gehören Polysulfone, insbesondere Polysulfon mit aromatischen und/oder heteroaromatischen Gruppen in der Hauptkette. Gemäß einem besonderen Aspekt der vorliegenden Erfindung weisen bevorzugte Polysulfone und Polyethersulfone eine Schmelzvolumenrate MVR 300/21,6 kleiner oder gleich 40 $cm^3$/10 min, insbesondere kleiner oder gleich 30 $cm^3$/10 min und besonders bevorzugt kleiner oder gleich 20 $cm^3$/10 min gemessen nach ISO 1133 auf. Hierbei sind Polysulfone mit einer Vicat-Erweichungstemperatur VST/A/50 von 180°C bis 230°C bevorzugt. In noch einer bevorzugten Ausführungsform der vorliegenden Erfindung ist das Zahlenmittel des Molekulargewichts von den Polysulfonen größer als 30.000 g/mol.

Zu den Polymeren auf Basis von Polysulfon gehören insbesondere Polymere, welche wiederkehrende Einheiten mit verknüpfenden Sulfon-Gruppen entsprechend den allgemeinen Formeln A, B, C, D, E, F und/oder G aufweisen:

$-O-R-SO_2-R-$ (A)

$O-R-SO_2-R-O-R-$ (B)

$-O-R-SO_2-R-O-R-R-$ (C)

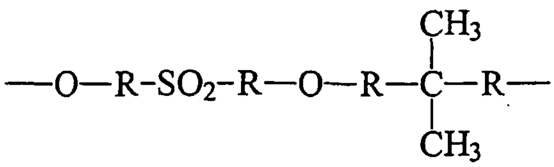

(D)

$-O-R-SO_2-R-R-SO_2-R-$ (E)

$-O-R-SO_2-R-R-SO_2-R-O-R-SO_2-]$ (F)

$$-\!\left[O-R-SO_2-R\right]\!-\!\left[SO_2-R-R\right]\!-$$ (G),

worin die Reste R unabhängig voneinander gleich oder verschieden eine aromatische oder heteroaromatische Gruppen darstellen, wobei diese Reste zuvor näher erläutert wurden. Hierzu gehören insbesondere 1,2-Phenylen, 1,3-Phenylen, 1,4-Phenylen, 4,4'-Biphenyl, Pyridin, Chinolin, Naphthalin, Phenanthren.

Zu den im Rahmen der vorliegenden Erfindung bevorzugten Polysulfone gehören Homo- und Copolymere, beispielsweise statistische Copolymere. Besonders bevorzugte Polysulfone umfassen wiederkehrende Einheiten der Formeln H bis N:

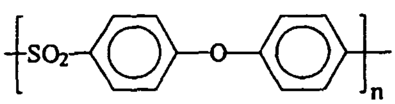

(H)

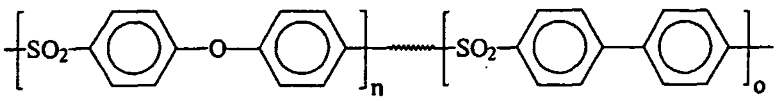

(I)

mit n > o

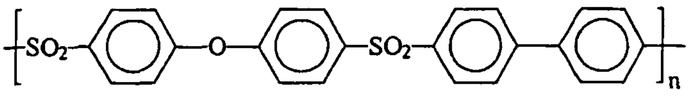

(J)

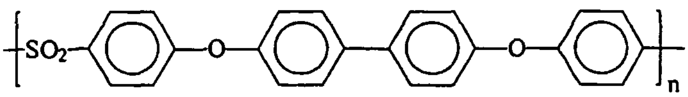

(K)

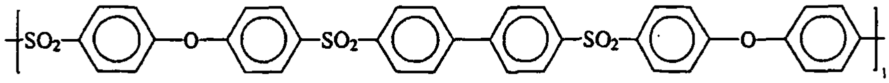

(L)

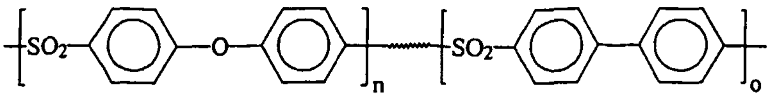

(M)

mit n < o

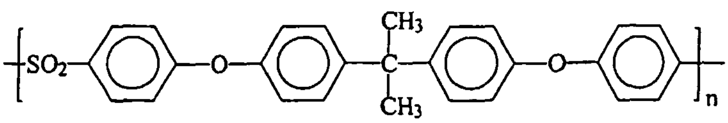

(N)

Die zuvor beschriebenen Polysulfone können unter den Handelsnamen ®Victrex 200 P, ®Victrex 720 P, ®Ultrason E, ®Ultrason S, ®Mindel, ®Radel A, ®Radel R, ®Victrex HTA, ®Astrel und ®Udel kommerziell erhalten werden.

Darüber hinaus sind Polyetherketone, Polyetherketonketone, Polyetheretherketone, Polyetheretherketonketone und Polyarylketone besonders bevorzugt. Diese Hochleistungspolymere sind an sich bekannt und können unter den Handelsnamen Victrex® PEEK™, ®Hostatec, ®Kadel kommerziell erhalten werden.

Die vorstehend genannten Polymeren können einzeln oder als Mischung (Blend) eingesetzt werden. Hierbei sind insbesondere Blends bevorzugt, die Polyazole und/oder Polysulfone enthalten. Durch die Verwendung von Blends können die mechanischen Eigenschaften verbessert und die Materialkosten verringert werden.

Zusätzlich kann der Polymerfilm weitere Modifizierungen, beispielsweise durch Vernetzung wie in der deutschen Patentanmeldung Nr. 10110752.8 oder in WO 00/44816 aufweisen. In einer bevorzugten Ausführungsform enthält die zur Quellung eingesetzte Polymerfolie aus einem basischen Polymer und mindestens einer Blendkomponente zusätzlich einem Vernetzer wie in der deutschen Patentanmeldung Nr. 10140147.7 beschrieben.

Zusätzlich ist es von Vorteil, wenn die zur Quellung eingesetzte Polymerfolie zuvor wie in der deutschen Patentanmeldung Nr. 10109829.4 beschrieben behandelt wird. Diese Variante ist vorteilhaft um die Quellung der Polymerfolie zu erhöhen.

Anstelle der mittels klassischer Verfahren hergestellten Polymerfolien können auch die polyazolhaltigen Polymermembranen wie in den deutschen Patentanmeldungen Nr. 10117686.4, 10144815.5, 10117687.2 beschrieben,

eingesetzt werden. Hierzu werden diese von der Polyphoshorsäure und/oder Phosphorsäure befreit und in Schritt A) eingesetzt.

Die erfindungsgemäße Polymermembran kann noch weitere Zusätze an Füll- und/oder Hilfsstoffen aufweisen.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann beispielsweise bei Schritt A) erfolgen. Des weiteren können diese Additive, falls diese in flüssiger Form vorliegen, auch nach der Polymerisation gemäß Schritt B) beigefügt werden.

Nicht limitierende Beispiele für Protonenleitende Füllstoffe sind

| | |
|---|---|
| Sulfate wie: | $CsHSO_4$, $Fe(SO_4)_2$, $(NH_4)_3H(SO_4)_2$, $LiHSO_4$, $NaHSO_4$, $KHSO_4$, $RbSO_4$, $LiN_2H_5SO_4$, $NH_4HSO_4$, |
| Phosphate wie | $Zr_3(PO_4)_4$, $Zr(HPO_4)_2$, $HZr_2(PO_4)_3$, $UO_2PO_4.3H_2O$, $H_8UO_2PO_4$, $Ce(HPO_4)_2$, $Ti(HPO_4)_2$, $KH_2PO_4$, $NaH_2PO_4$, $LiH_2PO_4$, $NH_4H_2PO_4$, $CsH_2PO_4$, $CaHPO_4$, $MgHPO_4$, $HSbP_2O_8$, $HSb_3P_2O_{14}$, $H_5Sb_5P_2O_{20}$, |
| Polysäure wie | $H_3PW_{12}O_{40}.nH_2O$ (n=21-29), $H_3SiW_{12}O_{40}.nH_2O$ (n=21-29), $H_xWO_3$, $HSbWO_6$, $H_3PMo_{12}O_{40}$, $H_2Sb_4O_{11}$, $HTaWO_6$, $HNbO_3$, $HTiNbO_5$, $HTiTaO_5$, $HSbTeO_6$, $H_5Ti_4O_9$, $HSbO_3$, $H_2MoO_4$ |
| Selenite und Arsenide wie | $(NH_4)_3H(SeO_4)_2$, $UO_2AsO_4$, $(NH_4)_3H(SeO_4)_2$, $KH_2AsO_4$, $Cs_3H(SeO_4)_2$, $Rb_3H(SeO_4)_2$, |
| Oxide wie | $Al_2O_3$, $Sb_2O_5$, $ThO_2$ $SnO_2$, $ZrO_2$, $MoO_3$ |
| Silikate wie | Zeolithe, Zeolithe($NH_4$+), Schichtsilikate, Gerüstsilikate, H-Natrolite, H-Mordenite, $NH_4$-Analcine, $NH_4$-Sodalite, $NH_4$-Gallate, H-Montmorillonite |
| Säuren wie | $HClO_4$, $SbF_5$ |
| Füllstoffe wie | Carbide, insbesondere SiC, $Si_3N_4$, Fasern, insbesondere Glasfasern, Glaspulvern und/oder Polymerfasern, bevorzugt auf Basis von Polyazolen. |

Diese Additive können in der protonenleitenden Polymermembran in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im allgemeinen umfaßt die Membran nach der Polymerisation gemäß Schritt B) höchstens 80 Gew.-%, vorzugsweise höchstens 50 Gew.-% und besonders bevorzugt höchstens 20 Gew.-% Additive.

Als weiteres kann diese Membran auch perfluorierte Sulfonsäure-Additive (vorzugsweise 0,1-20 Gew.-%, bevorzugt 0,2-15 Gew.-%, ganz bevorzugt 0,2-10 Gew.-%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)

Nicht limitierende Beispiele für persulfonierte Additive sind:

Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat und Perflurosulfoimide.

Vinylhaltige Phosphonsäuren sind in der Fachwelt bekannt. Es handelt sich hierbei um Verbindungen, die mindestens eine Kohlenstoff-Kohlenstoff-Doppelbindung und mindestens eine Phosphonsäuregruppe aufweisen. Vorzugsweise weisen die zwei Kohlenstoffatome, die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich die Polyvinylphosphonsäure aus dem Polymerisationsprodukt, das durch Polymerisation der Vinylhaltigen Phosphonsäure allein oder mit weiteren Monomeren und/oder Vernetzern erhalten wird.

Die Vinylhaltige Sulfonsäure kann ein, zwei, drei oder mehr Kohlenstoff-KohlenstoffDoppelbindungen umfassen. Des weiteren kann die Vinylhaltige Sulfonsäure ein, zwei, drei oder mehr Sulfonsäuregruppen enthalten.

Im allgemeinen enthält die Vinylhaltige Sulfonsäure 2 bis 20, vorzugsweise 2 bis 10 Kohlenstoffatome.

Bei der in Schritt A) verwendeten vinylhaltigen Sulfonsäure handelt es sich vorzugsweise Verbindungen der Formel

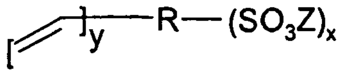

worin

R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,

Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und

x eine ganze Zahl 1, 2, 3, 4, 5, 6, 7, 8, 9 oder 10 bedeutet

y eine ganze Zahl 1, 2, 3, 4, 5, 6, 7, 8, 9 oder 10 bedeutet

und/oder der Formel

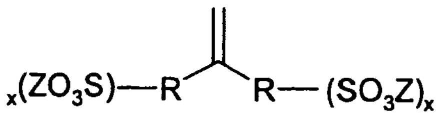

worin

R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,

Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und

x eine ganze Zahl 1, 2, 3, 4, 5, 6, 7, 8, 9 oder 10 bedeutet

und/oder der Formel

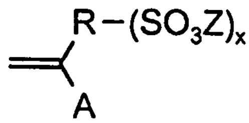

worin

A eine Gruppe der Formeln $COOR^2$, CN, $CONR^2{}_2$, $OR^2$ und/oder $R^2$ darstellt,
worin $R^2$ Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können

R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,

Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen; -OH, -CN, substituiert sein können und

x eine ganze Zahl 1, 2, 3, 4, 5, 6, 7, 8, 9 oder 10 bedeutet.

Zu den bevorzugten Vinylhaltigen Sulfonsäuren gehören unter anderem Alkene, die Sulfonsäuregruppen aufweisen, wie Ethensulfonsäure, Propensulfonsäure, Butensulfonsäure; Acrylsäure- und/oder Methacrylsäure-Verbindungen, die Sulfonsäuregruppen aufweisen, wie beispielsweise 2-Sulfomethyl-acrylsäure, 2-Sulfomethyl-methacrylsäure, 2-Sulfomethyl-acrylsäureamid und 2-Sulfomethylmethacrylsäureamid.

Besonders bevorzugt wird handelsübliche Vinylsulfonsäure (Ethensulfonsäure), wie diese beispielsweise von der Firma Aldrich oder Clariant GmbH erhältlich ist, eingesetzt. Eine bevorzugte Vinylsulfonsäure weist eine Reinheit von mehr als 70%, insbesondere 90 % und besonders bevorzugt mehr als 97% Reinheit auf.

Die Vinylhaltigen Sulfonsäuren können des weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Vinylhaltigen Sulfonsäuren.

Die in Schritt A) hergestellte gequollene Polymerfolie umfasst nach der Quellung vorzugsweise mindestens 1 Gew.-%, insbesondere mindestens 10 Gew.-% und besonders bevorzugt mindestens 30 Gew.-%, bezogen auf das Gesamtgewicht, vinylhaltige Sulfonsäure. Gemäß einem besonderen Aspekt der vorliegenden Erfindung umfasst die in Schritt A) hergestellte gequollene Polymerfolie höchstens 60 Gew.-% Polymerfolie, insbesondere höchstens 50 Gew.-% Polymerfolie und besonders bevorzugt höchstens 30 Gew.-% Polymerfolie, bezogen auf das Gesamtgewicht. Diese Größe kann aus der durch die Quellung bedingten Gewichtszunahme bestimmt werden.

Gemäß einer besonderen Ausführungsform der vorliegenden Erfindung umfasst die Mischung gemäß Schritt A) Vinylhaltige Phosphonsäuren. Durch den Zusatz von Vinylhaltiger Phosphonsäure können die Hochtemperatureigenschaften der Membran überraschend verbessert werden. Selbst einem relativ geringen Einsatz dieser Phosphonsäuren kann eine erfindungsgemäße Membran kurzfristig auch ohne Befeuchtung betrieben werden, ohne dass die Membran hierdurch zerstört werden würde. Wird der Anteil an Vinylhaltiger Phosphonsäure erhöht, so steigt die Leistungsfähigkeit bei zunehmender Temperatur an, wobei diese Leistungsfähigkeit auch ohne Befeuchtung erzielt wird.

Die in der Membran enthaltene Polyvinylphosphonsäure, die durch reaktive Gruppen auch vernetzt werden kann, bildet mit dem hochtemperaturstabilen Polymeren ein interpenetrierendes Netzwerk. Daher wird die Auswaschung des Elektrolyten durch gebildetes Produktwasser oder im Falle einer DMBZ durch den wässrigen Brennstoff deutlich vermindert. Eine erfindungsgemässe Polymerelektrolytmembran besitzt eine sehr geringe Methanolpermeabilität und eignet sich insbesondere für den Einsatz in einer DMBZ. Somit ist ein dauerhafter Betrieb einer Brennstoffzelle mit einer Vielzahl von Brennstoffen wie Wasserstoff, Erdgas, Benzin, Methanol oder Biomasse möglich. Hierbei ermöglichen die Membranen eine besonders hohe Aktivität dieser Brennstoffe. Bei hohen Temperaturen kann die Methanoloxidation hierbei mit hoher Aktivität erfolgen. In einer besonderen Ausführungsform eignen sich diese Membranen für den Betrieb in einer sogenannten dampfförmigen DMBZ, insbesondere bei Temperaturen im Bereich von 100 bis 200°C.

Durch die Möglichkeit des Betriebes bei Temperaturen oberhalb 100°C nimmt-Empfindlichkeit des Pt-Katalysators gegenüber Gasverunreinigungen, insbesondere CO, stark ab. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise kann der CO-Gehalt des Brennstoffes bei Temperaturen oberhalb 120°C größer als 5000 ppm sein, ohne dass die katalytische Wirkung des Pt-Katalysators drastisch reduziert wird. Bei Temperaturen im Bereich 150-200° können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Eine erfindungsgemäße Membran mit hohem Phosphonsäuregehalt zeigt über einen großen Temperaturbereich eine hohe Leitfähigkeit, die auch ohne eine zusätzliche Befeuchtung erzielt wird. Des weiteren kann eine Brennstoffzelle, die mit einer erfindungsgemäßen Membran ausgestattet ist, auch bei tiefen Temperaturen, beispielsweise bei 5°C mit Befeuchtung betrieben werden, falls der Sulfonsäuregehalt relativ hoch ist.

Vinylhaltige Phosphonsäuren sind in der Fachwelt bekannt. Es handelt sich hierbei um Verbindungen, die mindestens eine Kohlenstoff-Kohlenstoff-Doppelbindung und mindestens eine Phosphonsäuregruppe aufweisen. Vorzugsweise weisen die zwei Kohlenstoffatome, die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich die Polyvinylphosphonsäure aus dem Polymerisationsprodukt, das durch Polymerisation der Vinylhaltigen Phosphonsäure allein oder mit weiteren Monomeren und/oder Vernetzern erhalten wird.

Die Vinylhaltige Phosphonsäure kann ein, zwei, drei oder mehr Kohlenstoff-Kohlenstoff-Doppelbindungen umfassen. Des weiteren kann die Vinylhaltige Phosphonsäure ein, zwei, drei oder mehr Phosphonsäuregruppen enthalten.

Im allgemeinen enthält die Vinylhaltige Phosphonsäure 2 bis 20, vorzugsweise 2 bis 10 Kohlenstoffatome.

Bei der in Schritt A) verwendeten vinylhaltigen Phosphonsäure handelt es sich vorzugsweise um Verbindungen der Formel

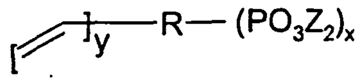

worin

- R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
- Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x eine ganze Zahl 1, 2, 3, 4, 5, 6, 7, 8, 9 oder 10 bedeutet
- y eine ganze Zahl 1, 2, 3, 4, 5, 6, 7, 8, 9 oder 10 bedeutet

und/oder der Formel

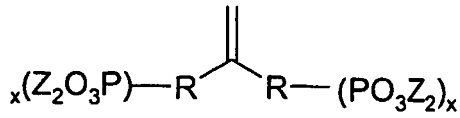

worin

- R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
- Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x eine ganze Zahl 1, 2, 3, 4, 5, 6, 7, 8, 9 oder 10 bedeutet

und/oder der Formel

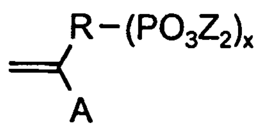

worin

- A eine Gruppe der Formeln $COOR^2$, CN, $CONR^2_2$, $OR^2$ und/oder $R^2$ darstellt,
  worin $R^2$ Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können
- R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
- Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x eine ganze Zahl 1, 2, 3, 4, 5, 6, 7, 8, 9 oder 10 bedeutet.

Zu den bevorzugten Vinylhaltigen Phosphonsäuren gehören unter anderem Alkene, die Phosphonsäuregruppen aufweisen, wie Ethenphosphonsäure, Propenphosphonsäure, Butenphosphonsäure; Acrylsäure- und/oder Methacrylsäure-Verbindungen, die Phosphonsäuregruppen aufweisen, wie beispielsweise 2-Phosphonomethyl-acrylsäure, 2-Phosphonomethyl-methacrylsäure, 2-Phosphonomethyl-acrylsäureamid und 2-Phosphonomethyl-methacrylsäüreamid.

Besonders bevorzugt wird handelsübliche Vinylphosphonsäure (Ethenphosphonsäure), wie diese beispielsweise von der Firma Aldrich oder Clariant GmbH erhältlich ist, eingesetzt. Eine bevorzugte Vinylphosphonsäure weist eine Reinheit von mehr als 70%, insbesondere 90 % und besonders bevorzugt mehr als 97% Reinheit auf.

Die Vinylhaltigen Phosphonsäuren können des weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Vinylhaltigen Phosphonsäuren.

Der Einsatz von Vinylhaltiger Phosphonsäure ist optional. Die in Schritt A) zur Quellung eingesetzte Flüssigkeit umfasst vorzugsweise mindestens 20 Gew.-%, insbesondere mindestens 30 Gew.-% und besonders bevorzugt mindestens 50 Gew.-%, bezogen auf das Gesamtgewicht der Flüssigkeit, vinylhaltige Phosphonsäure.

Die in Schritt A) zur Quellung verwendete Flüssigkeit kann zusätzlich noch weitere organische und/oder anorganische Lösungsmittel enthalten. Zu den organischen Lösungsmitteln gehören insbesondere polar aprotische Lösungsmittel, wie Dimethylsulfoxid (DMSO), Ester, wie Ethylacetat, und polar protische Lösungsmittel, wie Alkohole, wie Ethanol, Propanol, Isopropanol und/oder Butanol. Zu den anorganischen Lösungsmittel zählen insbesondere Wasser, Phosphorsäure und Polyphosphorsäure.

Diese können die Verarbeitbarkeit positiv beeinflussen. Insbesondere kann durch Zugabe des organischen Lösungsmittels die Löslichkeit des Polymeren verbessert werden. Der Gehalt an vinylhaltiger Sulfonsäure in solchen Lösungen beträgt im allgemeinen mindestens 5 Gew.-%, vorzugsweise mindestens 10 Gew.-%, besonders bevorzugt zwischen 10 und 97 Gew.-%. Der Gehalt an vinylhaltiger Phosphonsäure in solchen Lösungen beträgt vorzugsweise mindestens 5 Gew.-%, vorzugsweise mindestens 10 Gew.-%, besonders bevorzugt zwischen 10 und 97 Gew.-%.

Das Gewichtsverhältnis von Vinylhaltiger Phosphonsäure zu Vinylhaltiger Sulfonsäure kann in weiten Bereichen liegen. Vorzugsweise liegt das Verhältnis von Vinylhaltiger Phosphonsäure zu Vinylhaltiger Sulfonsäure im Bereich von 1:100 bis 99:1, insbesondere im Bereich von 1:10 bis 10:1. Bei einem Verhältnis größer oder gleich 1:1, insbesondere größer oder gleich 3:1, besonders bevorzugt größer oder gleich 5:1 kann die Membran auch bei Temperaturen größer als 100°C ohne Befeuchtung betrieben werden.

In einer weiteren Ausführungsform der Erfindung enthält die Flüssigkeit umfassend vinylhaltige Sulfonsäure weitere zur Vernetzung befähigte Monomere. Bei diesen handelt es sich insbesondere um Verbindungen, die mindestens 2 Kohlenstoff-Kohlenstoff Doppelbindungen aufweisen. Bevorzugt werden Diene, Triene, Tetraene, Dimethylacrylate, Trimethylacrylate, Tetramethylacrylate, Diacrylate, Triacrylate, Tetraacrylate.

Besonders bevorzugt sind Diene, Triene, Tetraene der Formel

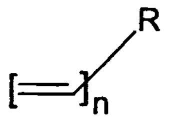

Dimethylacrylate, Trimethylycrylate, Tetramethylacrylate der Formel

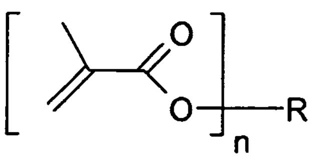

Diacrylate, Triacrylate, Tetraacrylate der Formel

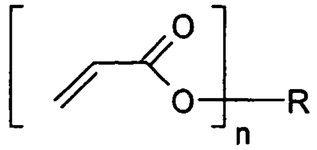

worin

R eine C1-C15-Alkylgruppe, C5-C20-Aryl oder Heteroarylgruppe, NR', $-SO_2$, PR', $Si(R')_2$ bedeutet, wobei die vorstehenden Reste ihrerseits substituiert sein können,

R' unabhängig voneinander Wasserstoff, eine C1-C15-Alkylgruppe, C1-C15-Alkoxygruppe, C5-C20-Aryl oder Heteroarylgruppe bedeutet und

n mindestens 2 ist.

Bei den Substituenten des vorstehenden Restes R handelt es sich vorzugsweise um Halogen, Hydroxyl, Carboxy, Carboxyl, Carboxylester, Nitrile, Amine, Silyl, Siloxan Reste.

Besonders bevorzugte Vernetzer sind Allylmethacrylat, Ethylenglykoldimethacrylat, Diethylenglykoldimethacrylat, Triethylenglykoldimethacrylat, Tetra- und Polyethylenglykoldimethacrylat, 1,3-Butandioldimethacrylat, Glycerindimethacrylat, Diurethandimethacrylat, Trimethylpropantrimethacrylat, Epoxyacrylate, beispielsweise Ebacryl, N',N-Methylenbisacrylamid, Carbinol, Butadien, Isopren, Chloropren, Divinylbenzol und/oder Bisphenol-A-dimethylacrylat. Diese Verbindungen sind beispielsweise von Sartomer Company Exton, Pennsylvania unter den Bezeichnungen CN-120, CN104 und CN-980 kommerziell erhältlich.

Der Einsatz von Vernetzern ist optional, wobei diese Verbindungen üblich im Bereich zwischen 0,05 bis 30 Gew.-%, vorzugsweise 0,1 bis 20 Gew.-%, besonders bevorzugt 1 und 10 Gew.-%, bezogen auf das Gewicht aus vinylhaltiger Sulfonsäure und gegebenenfalls vinylhaltiger Phosphonsäure, eingesetzt werden können.

Die Vinylhaltige Sulfonsäure umfassende Flüssigkeit kann eine Lösung darstellen, wobei die Flüssigkeit auch suspendierte und/oder dispergierte Bestandteile enthalten kann. Die Viskosität der Vinylhaltigen Sulfonsäure umfassenden Flüssigkeit kann in weiten Bereichen liegen, wobei zur Einstellung der Viskosität eine Zugabe von Lösungsmitteln oder eine Temperaturerhöhung erfolgen kann. Vorzugsweise liegt die dynamische Viskosität im Bereich von 0,1 bis 10000 mPa*s, insbesondere 0,2 bis 2000 mPa*s, wobei diese Werte beispielsweise gemäß DIN 53015 gemessen werden können.

Die Quellung der Folie in Schritt A) erfolgt vorzugsweise bei Temperaturen oberhalb 0°C, besonders bevorzugt zwischen Raumtemperatur (20°C) und 160°C. Prinzipiell kann die Quellung auch bei niedrigeren Temperaturen erfolgen, jedoch wird die zur Quellung erforderliche Zeitspanne erhöht und somit die Wirtschaftlichkeit reduziert. Bei zu hohen Temperaturen kann die zur Quellung eingesetzte Folie geschädigt werden. Die Dauer der Quellung ist von der gewählten Temperatur abhängig. Die Behandlungsdauer ist so zu wählen, daß die gewünschte Quellung erzielt wird.

Die Polymerisation der vinylhaltigen Sulfonsäure und gegebenenfalls vinylhaltiger Phosphonsäure in Schritt C) erfolgt vorzugsweise radikalisch. Die Radikalbildung kann thermisch, photochemisch, chemisch und/oder elektrochemisch erfolgen.

Beispielsweise kann eine Starterlösung, die mindestens eine zur Bildung von Radikalen befähigte Substanz enthält, der Flüssigkeit gemäß Schritt A) beigefügt werden: Des weiteren kann eine Starterlösung auf das gequollene flächige Gebilde aufgebracht werden. Dies kann mittels an sich bekannter Maßnahmen (z.B. Sprühen, Tauchen etc.) die aus dem Stand der Technik bekannt sind, erfolgen.

Geeignete Radikalbildner sind unter anderem Azoverbindungen, Peroxyverbindungen, Persulfatverbindungen oder Azoamidine. Nicht limitierende Beispiele sind Dibenzoylperoxid, Dicumolperoxid, Cumolhydroperoxid, Diisopropylperoxidicarbonat, Bis(4-t-butylcyclohexyl)peroxidicarbonat, Dikaliumpersulfat, Ammoniumperoxidisulfat, 2,2'-Azobis(2-methylpropionitril) (AIBN), 2,2'-Azobis-(isobuttersäureamidin)hydrochlorid, Benzpinakol, Dibenzylderivate, Methylethylenketonperoxid, 1,1-Azobiscyclohexancarbonitril, Methylethylketonperoxid, Acetylacetonperoxid, Dilaurylperoxid, Didecanoylperoxid, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, tert.-Butylperoxyisobutyrat, tert.-Butylperoxyacetat, Dicumylperoxid, 1,1-Bis(tert.-butylperoxy)cyclohexan, 1,1-Bis(tert.-butylperoxy)3,3,5-trimethylcyclohexan. Cumylhydroperoxid, tert.-Butylhydroperoxid, Bis(4-tert.-butylcyclohexyl)peroxydicarbonat, sowie die von der Firma DuPont unter dem Namen ®Vazo, beispielsweise ®Vazo V50 und ®Vazo WS erhältlichen Radikalbildner.

Des weiteren können auch Radikalbildner eingesetzt werden, die bei Bestrahlung Radikale bilden. Zu den bevorzugten Verbindungen gehören unter anderem $\alpha,\alpha$-Diethoxyacetophenon (DEAP, Upjon Corp), n-Butylbenzoinether (®Trigonal-14, AKZO) und 2,2-Dimethoxy-2-phenylacetophenon (®Igacure 651) und 1-Benzoylcyclohexanol (®Igacure 184), Bis(2,4,6-trimethylbenzoyl)phenylphosphinoxid (®Irgacure 819) und 1-[4-(2-Hydroxyethoxy)phenyl]-2-hydroxy-2-phenylpropan-1-on (®Irgacure 2959), die jeweils von der Fa. Ciba Geigy Corp. kommerziell erhältlich sind.

Üblicherweise werden zwischen 0,0001 und 5 Gew.-%, insbesondere 0,01 bis 3 Gew.-% (bezogen auf die Summe aus vinylhaltiger Sulfonsäure und gegebenenfalls vinylhaltiger Phosphonsäure) an Radikalbildner zugesetzt. Die Menge an Radikalbildner kann je nach gewünschten Polymerisationsgrad variiert werden.

Die Polymerisation kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen.

Die Polymerisation kann auch durch Einwirken von UV-Licht mit einer Wellenlänge von weniger als 400 nm erfolgen. Diese Polymerisationsmethode ist an sich bekannt und beispielsweise in Hans Joerg Elias, Makromolekulare Chemie, 5.Auflage, Band 1, s.492-511; D. R. Arnold, N. C. Baird, J. R. Bolton, J. C. D. Brand, P. W. M Jacobs, P.de Mayo, W. R. Ware, Photochemistry-An Introduction, Academic Press , New York und M.K.Mishra, Radical Photopolymerization of Vinyl Monomers, J. Macromol. Sci.-Revs. Macromol. Chem. Phys. C22(1982-1983) 409 beschrieben.

Die Polymerisation kann auch durch Einwirken von β-,γ- und/oder Elektronen Strahlen erzielt werden. Gemäß einer besonderen Ausführungsform der vorliegenden Erfindung wird eine Membran mit einer Strahlungsdosis im Bereich von 1 bis 300 kGy, bevorzugt von 3 bis 200 kGy und ganz besonders bevorzugt von 20 bis 100 kGy bestrahlt.

Die Polymerisation der Vinylhaltigen Sulfonsäure und gegebenenfalls der Vinylhaltigen Phosphonsäure in Schritt B) erfolgt vorzugsweise bei Temperaturen oberhalb Raumtemperatur (20°C) und kleiner 200°C, insbesondere bei Temperaturen zwischen 40°C und 150°C, besonders bevorzugt zwischen 50°C und 120°C. Die Polymerisation erfolgt vorzugsweise unter Normaldruck, kann aber auch unter Einwirkung von Druck erfolgen. Die Polymerisation führt zu einer Verfestigung der gequollenen Polymerfolie gemäß Schritt A), wobei diese Verfestigung durch Mikrohärtemessung verfolgt werden kann. Vorzugsweise beträgt die durch die Polymerisation bedingte Zunahme der Härte mindestens 20%, bezogen auf die Härte der in Schritt A) gequollenen Polymerfolie.

Gemäß einer besonderen Ausführungsform der vorliegenden Erfindung weisen die Membranen eine hohe mechanische Stabilität auf. Diese Größe ergibt sich aus der Härte der Membran, die mittels Mikrohärtemessung gemäss DIN 50539 bestimmt wird. Dazu wird die Membran mit einem Vickersdiamant innerhalb von 20 s sukzessive bis zu einer Kraft von 3 mN belastet und die Eindringtiefe bestimmt. Demnach beträgt die Härte bei Raumtemperatur mindestens 0,01 N/mm$^2$, bevorzugt mindestens 0,1 N /mm$^2$ und ganz besonders bevorzugt mindestens 1 N /mm$^2$, ohne dass hierdurch eine Beschränkung erfolgen soll. In der Folge wird die Kraft während 5 s konstant bei 3 mN gehalten und das Kriechen aus der Eindringtiefe berechnet. Bei bevorzugten Membranen beträgt das Kriechen $C_{HU}$ 0,003/20/5 unter diesen Bedingungen weniger als 20%, bevorzugt weniger als 10% und ganz besonders bevorzugt weniger als 5%. Der mittels Mikrohärtemessung bestimmte Modul beträgt YHU mindestens 0,5 MPa, insbesondere mindestens 5 MPa und ganz besonders bevorzugt mindestens 10 MPa, ohne dass hierdurch eine Beschränkung erfolgen soll.

Je nach gewünschten Polymerisationsgrad ist das flächige Gebilde, welches durch die Quellung der Polymerfolie und anschließende Polymerisation erhalten wird, eine selbsttragende Membran. Bevorzugt beträgt der Polymerisationsgrad mindestens 2, insbesondere mindestens 5, besonders bevorzugt mindestens 30 Wiederholeinheiten, insbesondere mindestens 50 Wiederholeinheiten, ganz besonders bevorzugt mindestens 100 Wiederholeinheiten. Dieser Polymerisationsgrad bestimmt sich über das Zahlenmittel des Molekulargewichts $M_n$, das durch GPC-Methoden ermittelt werden kann. Aufgrund der Probleme die in der Membran enthaltene Polyvinylphosphonsäure ohne Abbau zu isolieren, wird dieser Wert anhand einer Probe bestimmt, die durch Polymerisation von Vinylphosphonsäure ohne Lösungsmittel und ohne Zusatz von Polymer durchgeführt wird. Hierbei wird der Gewichtsanteil an Vinylphosphonsäure und an Radikalstarter im Vergleich zu den Verhältnissen nach Lösen der Membran konstant gehalten. Der Umsatz, der bei einer Vergleichspolymerisation erzielt wird, ist vorzugsweise größer oder gleich 20%, insbesondere größer oder gleich 40% und besonders bevorzugt größer oder gleich 75%, bezogen auf die eingesetzte vinylhaltige Phosphonsäure.

Die erfindungsgemäße Polymermembran enthält vorzugsweise zwischen 1 und 90 Gew.-% des Polymeren sowie zwischen 99 und 0,5 Gew.-% Polyvinylsulfonsäure. Bevorzugt enthält die erfindungsgemäße Polymermembran zwischen 3 und 85 Gew.-% des Polymeren sowie zwischen 70 und 1 Gew.-% Polyvinylsulfonsäure, besonders bevorzugt zwischen 5 und 50 Gew.-% des Polymeren sowie zwischen 50 und 5 Gew.-% Polyvinylsulfonsäure, jeweils bezogen auf das Gesamtgewicht der Polymermembran. Der Anteil an Polyvinylphosphonsäure liegt vorzugsweise im Bereich von 5 bis 97 Gew.-%, insbesondere im Bereich von 20 bis 95 Gew.-%, jeweils bezogen auf das Gesamtgewicht der Polymermembran. Zusätzlich kann die erfindungsgemäße Polymermembran noch weitere Füll- und/oder Hilfsstoffe enthalten.

Im Anschluss an die Polymerisation gemäß Schritt C) kann die Membran thermisch, photochemisch, chemisch und/oder elektrochemisch an der Oberfläche vernetzt werden. Diese Härtung der Membranoberfläche verbessert die Eigenschaften der Membran zusätzlich.

Gemäß einem besonderen Aspekt kann die Membran auf eine Temperatur von mindestens 150°C, vorzugsweise mindestens 200°C und besonders bevorzugt mindestens 250°C erwärmt werden. Vorzugsweise erfolgt die thermische Vernetzung in Gegenwart von Sauerstoff. Die Sauerstoffkonzentration liegt bei diesem Verfahrensschritt üblich im Bereich von 5 bis 50 Vol.-%, vorzugsweise 10 bis 40 Vol.-%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) und/oder UV-Licht erfolgen. Eine weitere Methode ist die Bestrahlung mit β-,γ- und/oder Elektronen Strahlen. Die Strahlungsdosis beträgt hierbei vorzugsweise zwischen 5 und 200 kGy, insbesondere 10 bis 100 kGy. Die Bestrahlung kann an Luft oder unter Inertgas erfolgen. Hierdurch werden die Gebrauchseigenschaften der Membran, insbesondere deren Haltbarkeit verbessert.

Je nach gewünschtem Vernetzungsgrad kann die Dauer der Vernetzungsreaktion in einem weiten Bereich liegen. Im allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Die erfindungsgemäße Polymermembran weist verbesserte Materialeigenschaften, gegenüber den bisher bekannten dotierten Polymermembranen auf. Umfassen die erfindungsgemäßen Membranen einen hohen Anteil an Polyvinylphosphonsäure, zeigen sie im Vergleich mit bekannten undotierten Polymermembranen bereits eine intrinsische Leitfähigkeit.

Die Eigenleitfähigkeit der erfindungsgemäßen Membran beträgt bei Temperaturen von 80°C, gegebenenfalls mit Befeuchtung, im allgemeinen mindestens 0,1 mS/cm, bevorzugt mindestens 1 mS/cm, insbesondere mindestens 2 mS/cm und besonders bevorzugt mindestens 5 mS/cm.

Bei einem Gewichtsanteil an Polyvinylphosphonsäure größer als 10%, bezogen auf das Gesamtgewicht der Membran, zeigen die Membranen im allgemeinen eine Leitfähigkeit bei Temperaturen von 160°C von mindestens 1 mS/cm, bevorzugt mindestens 3 mS/cm, insbesondere mindestens 5 mS/cm und besonders bevorzugt mindestens 10 mS/cm. Diese Werte werden hierbei ohne Befeuchtung erzielt.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten.

Die erfindungsgemäße Polymermembran weist verbesserte Materialeigenschaften gegenüber den bisher bekannten dotierten Polymermembranen auf. Umfassen die erfindungsgemäßen Membranen einen hohen Anteil an Polyvinylphosphonsäure, zeigen sie im Vergleich mit bekannten undotierten Polymermembranen bereits eine intrinsische Leitfähigkeit.

Die Durchtritts-Stromdichte beträgt bei Betrieb mit 0,5 M Methanollösung und 90°C in einer so genannten flüssigen Direktmethanolbrennstoffzelle vorzugsweise weniger als 100 $mA/cm^2$, insbesondere weniger als 70 $mA/cm^2$ besonders bevorzugt weniger als 50 $mA/cm^2$ und ganz besonders bevorzugt weniger als 10 $mA/cm^2$. Die Durchtritts-Stromdichte beträgt bei Betrieb mit einer 2 M Methanollösung und 160°C in einer so genannten gasförmigen Direktmethanolbrennstoffzelle vorzugsweise weniger als 100 $mA/cm^2$, insbesondere weniger als 50 $mA/cm^2$ ganz besonders bevorzugt weniger als 10 $mA/cm^2$.

Zur Bestimmung der Durchtritts-Stromdichte (cross over current density) wird die Kohlendioxidmenge, die an der Kathode freigesetzt wird, mittels eines $CO_2$-Sensors gemessen. Aus dem so erhaltenen Wert der $CO_2$-Menge wird, wie von P. Zelenay, S.C. Thomas, S. Gottesfeld in S. Gottesfeld, T.F. Fuller "Proton Conducting Membrane Fuel Cells II" ECS Proc. Vol. 98-27 S. 300-308 beschrieben, die Durchtritts-Stromdichte berechnet.

Zu möglichen Einsatzgebieten der erfindungsgemäßen Polymermembranen gehören unter anderem die Verwendung in Brennstoffzellen, bei der Elektrolyse, in Kondensatoren und in Batteriesystemen. Aufgrund ihres Eigenschaftsprofils werden die Polymermembranen vorzugsweise in Brennstoffzellen verwendet.

Die vorliegende Erfindung betrifft auch eine Membran-Elektroden-Einheit, die mindestens eine erfindungsgemäße Polymermembran aufweist. Die Membran-Elektroden-Einheit weist eine hohe Leistungsfähigkeit auch bei einem geringen Gehalt an katalytisch aktiven Substanzen, wie beispielsweise Platin, Ruthenium oder Palladium, auf. Hierzu können mit einer katalytisch aktiven Schicht versehene Gasdiffusionslagen eingesetzt werden.

Die Gasdiffusionslage zeigt im allgemeinen eine Elektronenleitfähigkeit. Üblich werden hierfür flächige, elektrisch leitende und säureresistente Gebilde eingesetzt. Zu diesen gehören beispielsweise Kohlefaser-Papiere, graphitisierte Kohlefaser-Papiere, Kohlefasergewebe, graphitisierte Kohlefasergewebe und/oder flächige Gebilde, die durch Zugabe von Ruß leitfähig gemacht wurden.

Die katalytisch aktive Schicht enthält eine katalytisch aktive Substanz. Zu diesen gehören unter anderem Edelmetalle, insbesondere Platin, Palladium, Rhodium, Iridium und/oder Ruthenium. Diese Substanzen können auch in Form von Legierungen unter einander eingesetzt werden. Des weiteren können diese Substanzen auch in Legierung

mit unedlen Metallen, wie beispielsweise Cr, Zr, Ni, Co und/oder Ti verwendet werden. Darüber hinaus können auch die Oxide der zuvor genannten Edelmetalle und/oder unedlen Metalle eingesetzt werden

Gemäß einem besonderen Aspekt der vorliegenden Erfindung werden die katalytisch aktiven Verbindungen in Form von Partikeln eingesetzt, die vorzugsweise eine Größe im Bereich von 1 bis 1000 nm, insbesondere 10 bis 200 nm und bevorzugt 20 bis 100 nm aufweisen.

Die katalytisch aktiven Partikel, die die zuvor genannten Substanzen umfassen, können als Metallpulver, sogenanntes schwarzes Edelmetall, insbesondere Platin und/oder Platinlegierungen, eingesetzt werden. Derartige Partikel weisen im allgemeinen eine Größe im Bereich von 5 nm bis 200 nm, vorzugsweise im Bereich von 10 nm bis 100 nm auf.

Darüber hinaus können die Metalle auch auf einem Trägermaterial eingesetzt werden. Vorzugsweise umfasst dieser Träger Kohlenstoff, der insbesondere in Form von Ruß, Graphit oder graphitisierter Ruß, eingesetzt werden kann. Der Metallgehalt dieser geträgerten Partikel, bezogen auf das Gesamtgewicht der Partikel, liegt im allgemeinen im Bereich von 1 bis 80 Gew.-%, vorzugsweise 5 bis 60 Gew.-% und besonders bevorzugt 10 bis 50 Gew.-%, ohne dass hierdurch eine Beschränkung erfolgen soll. Die Partikelgröße des Trägers, insbesondere die Größe der Kohlenstoffpartikel, liegt vorzugsweise im Bereich von 20 bis 100 nm, insbesondere 30 bis 60 nm. Die Größe der sich hierauf befindlichen Metallpartikel liegt vorzugsweise im Bereich von 1 bis 20 nm, insbesondere 1 bis 10 nm und besonders bevorzugt 2 bis 6 nm.

Die Größen der unterschiedlichen Partikel stellen Mittelwerte des Gewichtsmittels dar und können über Transmissionselektronenmikroskopie bestimmt werden.

Die zuvor dargelegten katalytisch aktiven Partikel können im allgemeinen kommerziell erhalten werden.

Des weiteren kann die katalytisch aktive Schicht übliche Additive enthalten. Hierzu gehören unter anderem Fluorpolymere wie z.B. Polytetrafluorethylen (PTFE) und oberflächenaktive Substanzen.

Zu den oberflächenaktiven Substanzen gehören insbesondere ionische Tenside, beispielsweise Fettsäuresalze, insbesondere Natriumlaurat, Kaliumoleat; und Alkylsulfonsäuren, Alkylsulfonsäuresalze, insbesondere Natriumperfluorohexansulfonat, Lithiumperfluorohexansulfonat, Ammoniumperfluorohexansulfonat, Perfluorohexansulfonsäure, Kaliumnonafluorbutansulfonat, sowie nichtionische Tenside, insbesondere ethoxylierte Fettalkohole und Polyethylenglykole.

Besonders bevorzugte Additive stellen Fluorpolymere, insbesondere Tetrafluorethylenpolymere dar. Gemäß einer besonderen Ausführungsform der vorliegenden Erfindung ist das Gewichtsverhältnis von Fluorpolymer zu Katalysatormaterial, umfassend mindestens ein Edelmetall und gegebenenfalls ein oder mehrere Trägermaterialien, größer als 0,1, wobei dieses Verhältnis vorzugsweise im Bereich von 0,2 bis 0,6 liegt.

Gemäß einer besonderen Ausführungsform der vorliegenden Erfindung weist die Katalysatorschicht eine Dicke im Bereich von 1 bis 1000 $\mu$m, insbesondere von 5 bis 500, vorzugsweise von 10 bis 300 $\mu$m auf. Dieser Wert stellt einen Mittelwert dar, der durch Messung der Schichtdicke im Querschnitt von Aufnahmen bestimmt werden kann, die mit einem Rasterelektronenmikroskop (REM) erhalten werden können.

Nach einer besonderen Ausführungsform der vorliegenden Erfindung beträgt der Edelmetallgehalt der Katalysatorschicht 0,1 bis 10,0 mg/cm$^2$, vorzugsweise 0,3 bis 6,0 mg/cm$^2$ und besonders bevorzugt 0,3 bis 3,0 mg/cm$^2$. Diese Werte können durch Elementaranalyse einer flächigen Probe bestimmt werden.

Die Herstellung einer Membran-Elektroden-Einheit kann unter anderem durch Heißpressen erfolgen. Hierzu wird der Verbund aus Elektrode, bestehend aus mit katalytisch aktiven Schichten versehene Gasdiffusionslagen, und eine Membran auf eine Temperatur im Bereich von 50°C bis 200°C erhitzt und mit einem Druck von 0,1 bis 5 MPa verpresst. Im allgemeinen genügen einige Sekunden, um die Katalysatorschicht mit der Membran zu verbinden. Vorzugsweise liegt diese Zeit im Bereich von 1 Sekunde bis 5 Minuten, insbesondere 5 Sekunden bis 1 Minute.

Gegenstand der vorliegenden Erfindung ist ebenfalls eine mit einer Katalysatorschicht beschichtete erfindungsgemässe protonenleitende Polymermembran.

Zum Aufbringen einer Katalysatorschicht auf die Membran können verschiedene Methoden eingesetzt werden. So kann beispielsweise ein Träger verwendet werden, der mit einer einen Katalysator enthaltenden Beschichtung versehen ist, um die erfindungsgemässe Membran mit einer Katalysatorschicht zu versehen.

Hierbei kann die Membran einseitig oder beidseitig mit einer Katalysatorschicht versehen werden. Wird die Membran nur mit einseitig einer Katalysatorschicht versehen, so muß die gegenüberliegende Seite der Membran mit einer Elektrode verpresst werden, die eine Katalysatorschicht aufweist. Falls beide Seiten der Membran mit einer Katalysatorschicht versehen werden sollen, können die nachfolgenden Methoden auch kombiniert angewendet werden, um ein optimales Ergebnis zu erzielen.

Erfindungsgemäß kann die Katalysatorschicht durch ein Verfahren aufgebracht werden, bei dem eine Katalysator-Suspension eingesetzt wird. Darüber hinaus können auch Pulver verwendet werden, die den Katalysator umfassen.

Die Katalysatorsuspension enthält eine katalytisch aktive Substanz. Diese Substanzen wurden zuvor im Zusammenhang mit der katalytisch aktiven Schicht näher ausgeführt.

Des weiteren kann die Katalysatorsuspension übliche Additive enthalten. Hierzu gehören unter anderem Fluorpolymere wie z.B. Polytetrafluorethylen (PTFE), Verdickungsmittel, insbesondere wasserlösliche Polymere wie z.B.

Cellulosederivate, Polyvinylalkohol, Polyethylenglykol, und oberflächenaktive Substanzen, die zuvor im Zusammenhang mit der katalytisch aktiven Schicht dargelegt wurden.

Zu den oberflächenaktiven Substanzen gehören insbesondere ionische Tenside, beispielsweise Fettsäuresalze, insbesondere Natriumlaurat, Kaliumoleat; und Alkylsulfonsäuren, Alkylsulfonsäuresalze, insbesondere Natriumperfluorohexansulfonat, Lithiumperfluorohexansulfonat, Ammoniumperfluorohexansulfonat, Perfluorohexansulfonsäure, Kaliumnonafluorbutansulfonat, sowie nichtionische Tenside, insbesondere ethoxylierte Fettalkohole und Polyethylenglykole.

Des weiteren kann die Katalysator-Suspension bei Raumtemperatur flüssige Bestandteile umfassen. Hierzu gehören unter anderem organische Lösungsmittel, die polar oder unpolar sein können, Phosphorsäure, Polyphosphorsäure und/oder Wasser. Die Katalysatorsuspension enthält vorzugsweise 1 bis 99 Gew.-%, insbesondere 10 bis 80 Gew.-% flüssige Bestandteile.

Zu den polaren, organischen Lösungsmitteln gehören insbesondere Alkohole, wie Ethanol, Propanol, Isopropanol und/oder Butanol.

Zu den organischen, unpolaren Lösungsmittel gehören unter anderem bekannte Dünnschichtverdünner, wie Dünnschichtverdünner 8470 der Firma DuPont, der Terpentinöle umfasst.

Besonders bevorzugte Additive stellen Fluorpolymere, insbesondere Tetrafluorethylenpolymere dar. Gemäß einer besonderen Ausführungsform der vorliegenden Erfindung ist das Gewichtsverhältnis von Fluorpolymer zu Katalysatormaterial, umfassend mindestens ein Edelmetall und gegebenenfalls ein oder mehrere Trägermaterialien, größer als 0,1, wobei dieses Verhältnis vorzugsweise im Bereich von 0,2 bis 0,6 liegt.

Die Katalysatorsuspension kann mit üblichen Verfahren auf die erfindungsgemässe Membran aufgebracht werden. Je nach Viskosität der Suspension, die auch in Pastenform vorliegen kann, sind verschiedene Methoden bekannt mit denen die Suspension aufgebracht werden kann. Geeignet sind Verfahren zum Beschichten von Folien, Geweben, Textilien und/oder Papieren, insbesondere Sprühverfahren und Druckverfahren, wie beispielsweise Schablonen- und Siebdruckverfahren, Inkjet-Verfahren, Walzenauftrag, insbesondere Rasterwalzen, Schlitzdüsenauftrag und Rakeln. Das jeweilige Verfahren sowie die Viskosität der Katalysatorsuspension ist abhängig von der Härte der Membran.

Die Viskosität kann durch den Feststoffgehalt, insbesondere den Anteil an katalytisch aktiven Partikeln, und den Anteil an Additiven beeinflusst werden. Die einzustellende Viskosität ist abhängig von der Auftragsmethode der Katalysatorsuspension, wobei die optimalen Werte sowie deren Bestimmung dem Fachmann geläufig sind.

Je nach Härte der Membran kann eine Verbesserung der Bindung von Katalysator und Membran durch Erhitzen und/oder Pressen erfolgen.

Gemäß einem besonderen Aspekt der vorliegenden Erfindung wird die Katalysatorschicht mit einem Pulver-Verfahren aufgebracht. Hierbei wird ein Katalysatorpulver eingesetzt, das zusätzliche Additive, die beispielhaft zuvor dargelegt wurden, enthalten kann.

Zum Aufbringen des Katalysatorpulver können unter anderem Sprühverfahren und Siebverfahren eingesetzt werden. Beim Sprühverfahren wird die Pulvermischung mit einer Düse, beispielsweise einer Schlitzdüse auf die Membran gesprüht. Im allgemeinen wird anschließend die mit einer Katalysatorschicht versehene Membran erhitzt, um die Verbindung zwischen Katalysator und Membran zu verbessern. Das Erhitzen kann beispielsweise über eine heiße Walze erfolgen. Derartige Methoden sowie Vorrichtungen zum Auftragen des Pulvers sind unter anderem in DE 195 09 748, DE 195 09 749 und DE 197 57 492 beschrieben.

Beim Siebverfahren wird das Katalysatorpulver mit einem rüttelnden Sieb auf die Membran aufgetragen. Eine Vorrichtung zum Aufbringen eines Katalysatorpulvers. auf eine Membran ist in WO 00/26982 beschrieben. Nach dem Auftragen des Katalysatorpulvers kann die Bindung von Katalysator und Membran durch Erhitzen verbessert werden. Hierbei kann die mit mindestens einer Katalysatorschicht versehene Membran auf eine Temperatur im Bereich von 50 bis 200°C, insbesondere 100 bis 180°C erhitzt werden.

Darüber hinaus kann die Katalysatorschicht durch ein Verfahren aufgebracht werden, bei dem man eine einen Katalysator enthaltende Beschichtung auf einen Träger aufbringt und anschließend die auf dem Träger befindliche Beschichtung enthaltend einen Katalysator auf die erfindungsgemässe Membran überträgt. Beispielhaft ist ein derartiges Verfahren in WO 92/15121 beschrieben.

Der mit einer Katalysatorbeschichtung versehene Träger kann beispielsweise dadurch hergestellt werden, dass eine zuvor beschriebene Katalysatorsuspension hergestellt wird. Diese Katalysatorsuspension wird anschließend auf eine Trägerfolie, beispielsweise aus Polytetrafluorethylen, aufgetragen. Nach dem Auftragen der Suspension werden die flüchtigen Bestandteile entfernt.

Das Übertragen der Beschichtung enthaltend einen Katalysator kann unter anderem durch Heißpressen erfolgen. Hierzu wird der Verbund umfassend eine Katalysatorschicht und eine Membran sowie eine Trägerfolie auf eine Temperatur im Bereich von 50°C bis 200°C erhitzt und mit einem Druck von 0,1 bis 5 MPa verpresst. Im allgemeinen genügen einige Sekunden, um die Katalysatorschicht mit der Membran zu verbinden. Vorzugsweise liegt diese Zeit im Bereich von 1 Sekunde bis 5 Minuten, insbesondere 5 Sekunden bis 1 Minute.

Gemäß einer besonderen Ausführungsform der vorliegenden Erfindung weist die Katalysatorschicht eine Dicke

im Bereich von 1 bis 1000 µm, insbesondere von 5 bis 500, vorzugsweise von 10 bis 300 µm auf. Dieser Wert stellt einen Mittelwert dar, der durch Messung der Schichtdicke im Querschnitt von Aufnahmen bestimmt werden kann, die mit einem Rasterelektronenmikroskop (REM) erhalten werden können.

Nach einer besonderen Ausführungsform der vorliegenden Erfindung umfasst die mit mindestens einer Katalysatorschicht versehene Membran 0,1 bis 10,0 mg/cm$^2$, vorzugsweise 0,3 bis 6,0 mg/cm$^2$ und besonders bevorzugt 0,3 bis 3,0 mg/cm$^2$. Diese Werte können durch Elementaranalyse einer flächigen Probe bestimmt werden.

Im Anschluss an die Beschichtung mit einem Katalysator kann die erhaltene Membran thermisch, photochemisch, chemisch und/oder elektrochemisch vernetzt werden. Diese Härtung der Membran verbessert die Eigenschaften der Membran zusätzlich. Hierzu kann die Membran auf eine Temperatur von mindestens 150°C, vorzugsweise mindestens 200°C und besonders bevorzugt mindestens 250°C erwärmt werden. Gemäß einer besonderen Ausführungsform erfolgt die Vernetzung in Gegenwart von Sauerstoff. Die Sauerstoffkonzentration liegt bei diesem Verfahrensschritt üblich im Bereich von 5 bis 50 Vol.-%, vorzugsweise 10 bis 40 Vol.-%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) und/oder UV-Licht erfolgen. Eine weitere Methode ist die Bestrahlung mit β-,γ- und/oder Elektronen Strahlen. Die Strahlungsdosis beträgt hierbei vorzugsweise zwischen 5 und 200 kGy, insbesondere 10 bis 100 kGy. Die Bestrahlung kann an Luft oder unter Inertgas erfolgen. Hierdurch werden die Gebrauchseigenschaften der Membran, insbesondere deren Haltbarkeit verbessert.

Je nach gewünschtem Vernetzungsgrad kann die Dauer der Vernetzungsreaktion in einem weiten Bereich liegen. Im allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Die erfindungsgemäße mit Katalysator beschichtete Polymermembran weist verbesserte Materialeigenschaften gegenüber den bisher bekannten dotierten Polymermembranen auf. Insbesondere zeigen sie im Vergleich mit bekannten dotierten Polymermembranen bessere Leistungen. Diese begründet sich insbesondere durch einen besseren Kontakt zwischen Membran und Katalysator.

Zur Herstellung einer Membran-Elektroden-Einheit kann die erfindungsgemäße Membran mit einer Gasdiffusionslage verbunden werden. Falls die Membran beidseitig mit einer Katalysatorschicht versehen ist, muß die Gasdiffusionslage vor dem Verpressen keinen Katalysator aufweisen.

Eine erfindungsgemäße Membran-Elektroden-Einheit zeigt eine überraschend hohe Leistungsdichte. Gemäß einer besonderen Ausführungsform leisten bevorzugte Membran-Elektroden-Einheiten eine Stromdichte von mindestens 0,1 A/cm$^2$, bevorzugt 0,2 A/cm$^2$, besonders bevorzugt 0,3 A/cm$^2$. Diese Stromdichte wird im Betrieb mit reinem Wasserstoff an der Anode und Luft (ca. 20 Vol.-% Sauerstoff, ca. 80 Vol.-% Stickstoff) an der Kathode bei Normaldruck (absolut 1013 mbar, mit offenem Zellausgang) und 0,6V Zellspannung gemessen. Hierbei können besonders hohe Temperaturen im Bereich von 150-200°C, vorzugsweise 160-180°C, insbesondere von 170°C eingesetzt werden.

Die zuvor genannten Leistungsdichten können auch bei geringer Stöchiometrie der Brenngase an beiden Seiten erzielt werden. Gemäß einem besonderen Aspekt der vorliegenden Erfindung ist die Stöchiometrie kleiner oder gleich 2, vorzugsweise kleiner oder gleich 1,5 ganz besonders bevorzugt kleiner oder gleich 1,2.

Gemäß einer besonderen Ausführungsform der vorliegenden Erfindung weist die Katalysatorschicht einen geringen Edelmetallgehalt auf. Der Edelmetall-Gehalt einer bevorzugten Katalysatorschicht, die von einer erfindungsgemäßen Membran umfasst wird, beträgt vorzugsweise höchstens 2 mg/cm$^2$, insbesondere höchstens 1 mg/cm$^2$, ganz besonders bevorzugt höchstens 0,5 mg/cm$^2$. Gemäß einem besonderen Aspekt der vorliegenden Erfindung weist eine Seite einer Membran einen höheren Metallgehalt auf als die gegenüberliegende Seite der Membran. Vorzugsweise ist der Metallgehalt der einen Seite mindestens doppelt so hoch wie der Metallgehalt der gegenüberliegenden Seite.

In einer weiteren Variante kann auf die erfindungsgemäße Membran eine katalytisch aktive Schicht aufgebracht werden und diese mit einer Gasdiffusionslage verbunden werden. Hierzu wird gemäß den Schritten A) und B) eine Membran gebildet und der Katalysator aufgebracht. In einer Variante kann der Katalysator vor oder zusammen mit der Starterlösung aufgebracht werden. Auch diese Gebilde sind Gegenstand der vorliegenden Erfindung.

Darüber hinaus kann die Bildung der Membran gemäß den Schritten A) und B) auch auf einem Träger oder einer Trägerfolie erfolgen, die bereits den Katalysator aufweist. Nach Entfernen des Trägers bzw. der Trägerfolie befindet sich der Katalysator auf der erfindungsgemäßen Membran. Auch diese Gebilde sind Gegenstand der vorliegenden Erfindung.

Ebenfalls Gegenstand der vorliegenden Erfindung ist eine Membran-Elektroden-Einheit, die mindestens eine erfindungsgemäße Polymermembran ggf. in Kombination mit einer weiteren Polymermembran auf Basis von Polyazolen oder einer Polymerblendmembran enthält.

Zu möglichen Einsatzgebieten der erfindungsgemäßen Polymermembranen gehören unter anderem die Verwendung in Brennstoffzellen, bei der Elektrolyse, in Kondensatoren und in Batteriesystemen. Aufgrund ihres Eigenschaftsprofils werden die Polymermembranen vorzugsweise in Brennstoffzellen verwendet.

**Versuchsbeispiele:**

Beispiel 1:

Herstellung von Vinylsulfonsäure

Eine Säulenkolonne mit einem Durchmesser von 5,5 cm wird mit einem Ionenaustauscherharz bestehend aus vernetztem sulfonierten Polystyrol vom Typ Dowex 50W-X4 erhalten von Aldrich bis zu einer Höhe von 20 cm befüllt. Anschliessend werden 100 ml einer 25% wässrigen Lösung von Natrium-Vinylsulfonsäure-Salz (0,19 mol) durch die Säule durchlaufen lassen, und es werden 80-90 ml (0,16 mol) Vinylsulfonsäure aufgefangen. Das Lösungsvolumen wird anschliessend mit einem Rotationsverdampfer auf etwa die Hälfte (40-45 ml) reduziert.

Beispiel 2:

Die Vinylsulfonsäure Lösung aus Beispiel 1 wird zusammen mit 56g einer 90%-igen Vinylphosphonsäure gemischt und im Ofen bei einer Temperatur von 70°C während 1 Stunde behandelt. Zu dieser Mischung gibt man 5g Bisphenol-A Diepoxyacrylat (CN-120 der Firma Sartomer Inc.) und 8g 1-hydroxycyclohexyl phenyl keton (Irgacure 184 von Ciba Geigy). Die Mischung wird dann gerührt bis eine homogene Lösung entsteht. Die Lösung wird wieder im Ofen bei 70°C während 30 Minuten behandelt. In diese Lösung taucht man 0,5g einer Folie aus hochmolekularem Polybenzimidazol, die aus einer PBI-DMAc Lösung gemäss DE 10052237.8 und durch Auswahl von geeignetem Polymergranulat gemäss DE 10129458.1 hergestellt wurde. Die Lösung wird mit einer Aluminiumfolie als Lichtschutz abgedeckt und wird im Ofen bei 80°C während 3h gehalten. Überschüssige Flüssigkeit wird von der Membranoberfläche abgetupft. Der so erhaltene Film wird anschliessend zwischen 2 transparente Folien aus orientiertem Polypropylen gelegt und überschüssige Luft durch mehrmaliges Abrollen wie oben beschrieben entfernt. Dieses Laminat wird anschliessend in eine Kammer überführt und dort wird jede Seite 1 Minute mit einer 300 W Quecksilberbogenlampe vom Typ H3T7 der Firma General Electric bestrahlt und dieser Prozess wird einmal wiederholt. Der Polypropylen Film wird vorsichtig von der Membran entfernt. Dieser Prozess wird durch leichtes Erhitzen mit einem Heissluftföhn erleichtert. Eine typische Gewichtszunahme nach dieser Behandlung beträgt 350 wt%.

Beispiel 3:

Bei Raumtemperatur werden 20 g (0,97 mol) eines Natriumstyrolsulfonsäuresalzes von Aldrich mit 200 ml destilliertem Wasser gemischt. Anschliessend wird der Ionenaustauschprozess wie in Beispiel 1 beschrieben wiederholt und es wird 160 ml einer Styrolsulfonsäure Lösung erhalten. Diese Lösungsmenge wird anschliessend mit einem Rotationsverdampfer auf 60 ml reduziert. Zu dieser Lösung werden 100 ml Vinylphosphonsäure zugegeben und die Mischung wird im Dunkeln während 24 h gerührt. Zu dieser Lösung gibt man 8g Bisphenol-A Diepoxyacrylat (CN-120 der Firma Sartomer Inc.) und 5,5g 1-hydroxycyclohexyl phenyl keton (Irgacure 184 von Ciba Geigy). Die Mischung wird dann im Ofen bei 70°C während 4 h unter gelegentlichem Rühren behandelt. In diese Mischung taucht man 0,4g einer Folie aus hochmolekularem Polybenzimidazol, die aus einer PBI-DMAc Lösung gemäss DE 10052237.8 und durch Auswahl von geeignetem Polymergranulat gemäss DE 10129458.1 hergestellt wurde. Die Mischung wird mit einer Aluminiumfolie, als Lichtschutz abgedeckt und wird im Ofen bei 80°C während 3h gehalten. Überschüssige Flüssigkeit wird von der Membranoberfläche abgetupft. Der so erhaltene Film wird anschliessend zwischen 2 transparente Folien aus orientiertem Polypropylen gelegt und überschüssige Luft durch mehrmaliges Abrollen wie oben beschrieben entfernt. Dieses Laminat wird anschliessend in eine Kammer überführt und dort wird jede Seite 1 Minute mit einer 300 W Quecksilberbogenlampe vom Typ H3T7 der Firma General Electric bestrahlt und dieser Prozess wird einmal wiederholt. Der Polypropylen Film wird vorsichtig von der Membran entfernt. Eine typische Gewichtszunahme nach dieser Behandlung beträgt 270 wt%.

## Patentansprüche

1. Protonenleitende Elektrolytmembran erhältlich durch ein Verfahren umfassend die Schritte

   A) Quellen einer Polymerfolie mit einer Vinylhaltigen Sulfonsäure umfassenden Flüssigkeit und
   B) Polymerisation der in Schritt A) eingebrachten Flüssigkeit vorhandenen Vinylhaltigen Sulfonsäure.

2. Membran gemäß Anspruch 1, **dadurch gekennzeichnet, daß** die in Schritt A) eingesetzten Folie eine Quellung von mindestens 3 % in der Vinylhaltigen Sulfonsäure umfassenden Flüssigkeit aufweist.

**3.** Membran gemäß Anspruch 1, **dadurch gekennzeichnet, daß** es sich bei dem in Schritt A) eingesetzten Polymeren um hochtemperaturstabile Polymere, die mindestens ein Stickstoff-, Sauerstoff- und/oder Schwefelatom in einer oder in unterschiedlichen Wiederholungseinheit enthalten; handelt.

**4.** Membran gemäß Anspruch 1, **dadurch gekennzeichnet, daß** die Vinylhaltige Sulfonsäure umfassende Flüssigkeit Verbindungen der Formel

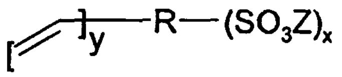

worin

R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet
y eine ganze Zahl 1, 2, 3, 4, 5, 6, 7, 8, 9 oder 10 bedeutet

und/oder der Formel

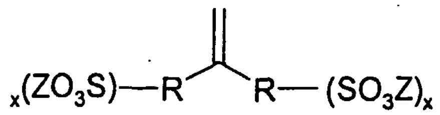

worin

R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet,

und/oder der Formel

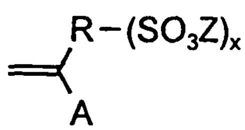

worin

A eine Gruppe der Formeln $COOR^2$, CN, $CONR^2_2$, $OR^2$ und/oder $R^2$ darstellt,
worin $R^2$ Wasserstoff, eine C1-C15-Alkylgruppe, C1-C15-Alkoxygnrppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können
R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet,

enthält.

**5.** Membran gemäß Anspruch 1, **dadurch gekennzeichnet, dass** die Vinylhaltige Sulfonsäure umfassende Flüssigkeit Vinylhaltige Phosphonsäure enthält.

**6.** Membran gemäß Anspruch 5, **dadurch gekennzeichnet, dass** die Vinylhaltige Sulfonsäure umfassende Flüssigkeit Verbindungen der Formel

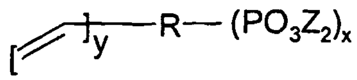

worin

R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet
y eine ganze Zahl 1, 2, 3, 4, 5, 6, 7, 8, 9 oder 10 bedeutet

und/oder der Formel

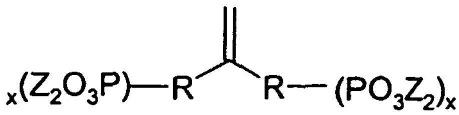

worin

R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet,

und/oder der Formel

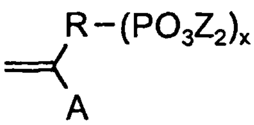

worin

A eine Gruppe der Formeln $COOR^2$, CN, $CONR^2{}_2$, $OR^2$ und/oder $R^2$ darstellt,
worin $R^2$ Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können,
R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet,

enthält.

7. Membran gemäß Anspruch 5 oder 6, **dadurch gekennzeichnet, dass** das Gewichtsverhältnis von Vinylhaltiger Phosphonsäure zu Vinylhaltiger Sulfonsäure im Bereich von 1:100 bis 99:1 liegt.

8. Membran gemäß Anspruch 1, **dadurch gekennzeichnet, daß** die Vinylhaltige Sulfonsäure umfassende Flüssigkeit zur Vernetzung befähigte Monomere enthält.

9. Membran gemäß Anspruch 1, **dadurch gekennzeichnet, daß** die Vinylhaltige Sulfonsäure umfassende Flüssigkeit mindestens eine Substanz enthält, die zur Bildung von Radikalen befähigt ist.

10. Membran gemäß Anspruch 1, **dadurch gekennzeichnet, daß** die Polymerisation gemäß Schritt C) durch Bestrahlung mit IR- bzw. NIR-Licht, UV-Licht, β-,γ- und/oder Elektronen Strahlen erfolgt.

11. Membran gemäß Anspruch 1, **dadurch gekennzeichnet, daß** die Membran eine Eigenleitfähigkeit von mindestens 0,001 S/cm aufweist.

12. Membran gemäß Anspruch 1, **dadurch gekennzeichnet, daß** die Membran zwischen 1 und 90 Gew.-% des Polymeren sowie zwischen 99 und 0,5 Gew.-% Polyvinylsulfonsäure enthält.

13. Membran gemäß Anspruch 1, **dadurch gekennzeichnet, daß** die Membran eine Schicht enthaltend eine katalytisch aktive Komponente aufweist.

14. Membran-Elektroden-Einheit enthaltend mindestens eine Elektrode und mindestens eine Membran gemäß einem oder mehreren der Ansprüche 1 bis 13.

15. Brennstoffzelle enthaltend eine oder mehrere Membran-Elektroden-Einheiten gemäß Anspruch 14 und/oder eine oder mehrere Membranen gemäß einem der Ansprüche 1 bis 13.

## Claims

1. Proton-conducting electrolyte membrane obtainable by a process comprising the steps:

A) swelling a polymer film with a liquid comprising a vinyl-containing sulphonic acid and
B) polymerising the vinyl-containing sulphonic acid present in liquid introduced in step A).

2. Membrane according to claim 1, **characterised in that** the film used in step A) exhibits swelling of at least 3 % in the liquid comprising a vinyl-containing sulphonic acid.

3. Membrane according to claim 1, **characterised in that** the polymers used in step A) are polymers that are stable at high temperatures and contain at least one nitrogen, oxygen and/or sulphur atom in one or more repeat units.

4. Membrane according to claim 1, **characterised in that** the liquid comprising a vinyl-containing sulphonic acid contains compounds of the formula

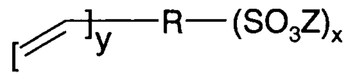

wherein

R represents a bond, a C1-C15 alkyl group, C1-C15 alkoxy group, ethyleneoxy group or C5-C20 aryl or heteroaryl group, in which the aforementioned radicals may in turn be substituted by halogen, -OH, COOZ, -CN, $NZ_2$,
Z represents, independently of one another, hydrogen, C1-C15 alkyl group, C1-C15 alkoxy group, ethyleneoxy group or C5-C20 aryl or heteroaryl group, in which the aforementioned radicals may in turn be substituted by halogen, -OH, -CN, and
x represents an integer 1, 2, 3, 4, 5, 6, 7, 8, 9 or 10
y represents an integer 1, 2, 3, 4, 5, 6, 7, 8, 9 or 10

and/or of the formula

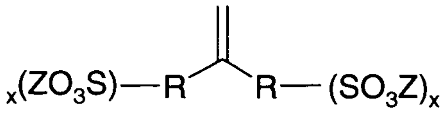

wherein

R represents a bond, a C1-C15 alkyl group, C1-C15 alkoxy group, ethyleneoxy group or C5-C20 aryl or heteroaryl group, in which the aforementioned radicals may in turn be substituted by halogen, -OH, COOZ, -CN, $NZ_2$,
Z represents, independently of one another, hydrogen, C1-C15 alkyl group, C1-C15 alkoxy group, ethyleneoxy group or C5-C20 aryl or heteroaryl group, in which the aforementioned radicals may in turn be substituted by halogen, -OH, -CN, and
x represents an integer 1, 2, 3, 4, 5, 6, 7, 8, 9 or 10

and/or of the formula

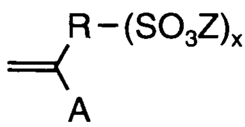

wherein

A represents a group of the formulae $COOR^2$, CN, $CONR^2_2$, $OR^2$ and/or $R^2$,
wherein $R^2$ represents hydrogen, a C1-C15 alkyl group, C1-C15 alkoxy group, ethyleneoxy group or C5-C20 aryl or heteroaryl group, in which the aforementioned radicals may in turn be substituted by halogen, -OH, COOZ, -CN, $NZ_2$
R represents a bond, a divalent C1-C15 alkylene group, divalent C1-C15 alkyleneoxy group, for example ethyleneoxy group or divalent C5-C20 aryl or heteroaryl group, in which the aforementioned radicals may in turn be substituted by halogen, -OH, COOZ, -CN, $NZ_2$,
Z represents, independently of one another, hydrogen, C1-C15 alkyl group, C1-C15 alkoxy group, ethyleneoxy group or C5-C20 aryl or heteroaryl group, in which the aforementioned radicals may in turn be substituted by halogen, -OH, -CN, and
x represents an integer 1, 2, 3, 4, 5, 6, 7, 8, 9 or 10.

5. Membrane according to claim 1, **characterised in that** the liquid comprising a vinyl-containing sulphonic acid contains phosphonic acid.

6. Membrane according to claim 5, **characterised in that** the liquid comprising a vinyl-containing sulphonic acid contains compounds of the formula

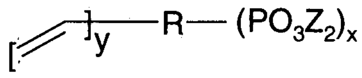

wherein

R represents a bond, a C1-C15 alkyl group, C1-C15 alkoxy group, ethyleneoxy group or C5-C20 aryl or heteroaryl group, in which the aforementioned radicals may in turn be substituted by halogen, -OH, COOZ, -CN, $NZ_2$,
Z represents, independently of one another, hydrogen, C1-C15 alkyl group, C1-C 15 alkoxy group, ethyleneoxy group or C5-C20 aryl or heteroaryl group, in which the aforementioned radicals may in turn be substituted by halogen, -OH, -CN, and
x represents an integer 1, 2, 3, 4, 5, 6, 7, 8, 9 or 10
y represents an integer l, 2, 3, 4, 5, 6, 7, 8, 9 or 10

and/or of the formula

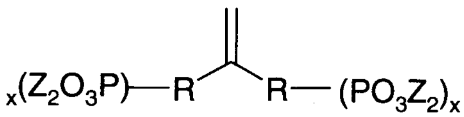

wherein

R represents a bond, a C1-C15 alkyl group, C1-C15 alkoxy group, ethyleneoxy group or C5-C20 aryl or heteroaryl group, in which the aforementioned radicals may in turn be substituted by halogen, -OH, COOZ, -CN, $NZ_2$,
Z represents, independently of one another, hydrogen, C1-C15 alkyl group, C1-C 15 alkoxy group, ethyleneoxy group or C5-C20 aryl or heteroaryl group, in which the aforementioned radicals may in turn be substituted by halogen, -OH, -CN, and
x represents an integer 1, 2, 3, 4, 5, 6, 7, 8, 9 or 10

and/or of the formula

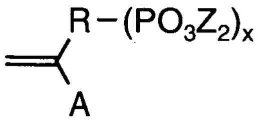

wherein

A represents a group of the formulae $COOR^2$, CN, $CONR^2_2$, $OR^2$ and/or $R^2$,
wherein $R^2$ represents hydrogen, a C1-C15 alkyl group, C1-C15 alkoxy group, ethyleneoxy group or C5-C20 aryl or heteroaryl group, in which the aforementioned radicals may in turn be substituted by halogen, -OH, COOZ, -CN, $NZ_2$
R represents a bond, a divalent C1-C15 alkylene group, divalent C1-C15 alkyleneoxy group, for example ethyleneoxy group or divalent C5-C20 aryl or heteroaryl group, in which the aforementioned radicals may in turn be substituted by halogen, -OH, COOZ, -CN, $NZ_2$,
Z represents, independently of one another, hydrogen, C1-C15 alkyl group, C1-C15 alkoxy group, ethyleneoxy group or C5-C20 aryl or heteroaryl group, in which the aforementioned radicals may in turn be substituted by halogen, -OH, -CN, and
x represents an integer 1, 2, 3, 4, 5, 6, 7, 8, 9 or 10.

**7.** Membrane according to claim 5 or 6, **characterised in that** the ratio by weight of vinyl-containing phosphonic acid to vinyl-containing sulphonic acid lies in the range of 1:100 to 99:1.

**8.** Membrane according to claim 1, **characterised in that** the liquid comprising a vinyl-containing sulphonic acid contains monomers capable of crosslinking.

**9.** Membrane according to claim 1, **characterised in that** the liquid comprising a vinyl-containing sulphonic acid contains at least one substance capable of forming radicals.

**10.** Membrane according to claim 1, **characterised in that** the polymerisation in step C) is carried out by irradiation with IR or NIR light, UV-light,13, β, γ and/or electron rays.

**11.** Membrane according to claim 1, **characterised in that** the membrane has inherent conductivity of at least 0.001 S/cm.

**12.** Membrane according to claim 1, **characterised in that** the membrane contains between 1 and 90 % by weight of the polymer and between 99 and 0.5 % by weight of polyvinyl sulphonic acid.

**13.** Membrane according to claim 1, **characterised in that** the membrane comprises a layer containing a catalytically active component.

**14.** Membrane electrode unit containing at least one electrode and at least one membrane according to one or more of claims 1 to 13.

**15.** Fuel cell containing one or more membrane electrode units according to claim 14 and/or one or more membranes according to any one of claims 1 to 13.

## Revendications

**1.** Membrane à électrolyte polymère conductrice de protons qui peut être produite par un procédé comprenant les étapes:

A) le gonflement d'une feuille polymère avec un liquide comprenant de l'acide sulfonique contenant du vinyle et
B) la polymérisation de l'acide sulfonique contenant du vinyle existant dans le liquide de l'étape A).

**2.** Membrane selon la revendication 1, **caractérisée en ce que** la feuille utilisée dans l'étape A) présente un gonflement d'au moins 3 % dans le liquide contenant de l'acide sulfonique contenant du vinyle.

**3.** Membrane selon la revendication 1, **caractérisée en ce qu'**au polymère utilisé dans l'étape A), il s'agit de polymères stables à haute température, contenant au moins un atome d'azote, d'oxygène et/ou de soufre dans une unitaté répétée ou en unités répétés différentes.

**4.** Membranǎ selon la revendication 1, **caractérisée en ce que** le liquide comprenant l'acide sulfonique contenant du vinyle contient des composés de formule

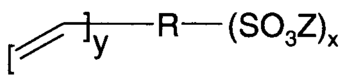

où

R signifie une liaison, un groupement alkyle en C1 à C15, un groupement alkoxy en C1 à C15, un groupement éthylenoxy ou un groupement aryle en C5 à C20 ou hétéroaryle, où les restes antérieurs peuvent être pour leur part substitués par un halogène, -OH, COOZ, -CN, $NZ_2$,
Z signifie independamment l'un de l'autre de l'hydrogène, un groupement alkyle en C1 à C15, un groupement alkoxy en C1 à C15, un groupement éthylenoxy ou un groupement aryle en C5 à C20 ou hétéroaryle, où les

restes antérieurs peuvent être pour leur part substitués par un halogène, -OH, -CN,
x signifie un numbre entier valant 1, 2, 3, 4, 5, 6, 7, 8, 9 ou 10
y signifie un numbre entier valant 1, 2, 3, 4, 5, 6, 7, 8, 9 ou 10

et/ou de formule

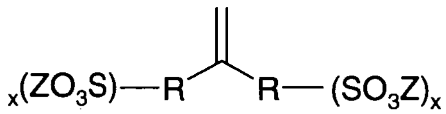

où

R signifie une liaison, un groupement alkyle en C1 à C15, un groupement alkoxy en C1 à C15, un groupement éthylenoxy ou un groupement aryle en C5 à C20 ou hétéroaryle, où les restes antérieurs peuvent être pour leur part substitués par un halogène, -OH, COOZ, -CN, $NZ_2$.
Z signifie indépendamment l'un de l'autre de l'hydrogène, un groupement alkyle en C1 à C15, un groupement alkoxy en C1 à C15, un groupement éthylenoxy ou un groupement aryle en C5 à C20 ou hétéroaryle, où les restes antérieurs peuvent être pour leur part substitués par un halogène, -OH, -CN.
X signifie un numbre entier valant 1, 2, 3, 4, 5, 6, 7, 8, 9 ou 10.

et/ou de formule

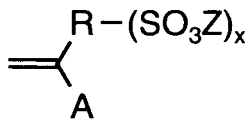

où

A signifie un groupement de formules $COOR^2$, CN, $CONR^2_2$, $OR^2$ et/ou $R^2$, où $R^2$ signifie de l'hydrogène, un groupement alkyle en C1 à C15, un groupement alkoxy en C1 à C15, un groupement éthylenoxy ou un groupement aryle en C5 à C20 ou hétéroaryle, où les restes antérieurs peuvent être pour leur part substitués par un halogène, -OH, COOZ, -CN, $NZ_2$.
R signifie une liaison, un groupement bivalent alkylene en C1 à C15, un groupement bivalent alkylenoxy en C1 a C15, par exemple un groupement éthylenoxy ou un groupement bivalent aryle en C5 à C20 ou hétéroaryle, où les restes antérieurs peuvent être pour leur part substitués par un halogène, -OH, COOZ, -CN, $NZ_2$.
Z signifie independamment l'un de l'autre de l'hydrogène, un groupement alkyle en C1 à C15, un groupement alkoxy en C1 à C15, un groupement éthylenoxy ou un groupement aryle en C5 à C20 ou hétéroaryle, où les restes antérieurs peuvent être pour leur part substitués par un halogène,-OH, -CN,
X signifie un numbre entier valant 1, 2, 3, 4, 5, 6, 7, 8, 9 ou 10.

5. Membrane selon la revendication 1, **caractérisée en ce que** le liquide comprenant l'acide sulfonique contenant du vinyle contient de l'acide phosphonique contenant du vinyle.

6. Membrane selon la revendication 5, **caractérisée en ce que** le liquide comprenant l'acide sulfonique contenant du vinyle contient des composés de formule

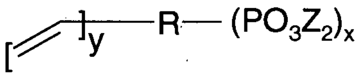

où

R signifie une liaison, un groupement alkyle en C1 à C15, un groupement alkoxy en C1 à C15, un groupement éthylenoxy ou un groupement aryle en C5 à C20 ou hétéroaryle où les restes antérieurs peuvent être pour leur part substitués par un halogène, -OH, COOZ, -CN, $NZ_2$.
Z signifie independamment l'un de l'autre l'hydrogène, un groupement alkyle en C1 à C15, un groupement alkoxy en C1 à C15, un groupement éthylenoxy ou un groupement aryle en C5 à C20 ou hétéroaryle, où les restes antérieurs peuvent être pour leur part substitués par un halogène,-OH, -CN,
X signifie un numbre entier valant 1, 2, 3, 4, 5, 6, 7, 8, 9 ou 10
Y signifie un numbre entier valant 1, 2, 3, 4, 5, 6, 7, 8, 9 ou 10

et/ou de formule

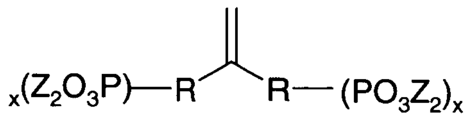

où

R signifie une liaison, un groupement alkyle en C1 à C15, un groupement alkoxy en C1 à C15, un groupement éthylenoxy ou un groupement aryle en C5-C20 ou hétéroaryle, où les restes antérieurs peuvent être pour leur part substitués par un halogène, -OH, COOZ, -CN, $NZ_2$.
Z signifie indépendamment l'un de l'autre l'hydrogène, un groupement alkyle en C1 à C15, un groupement alkoxy en C1 à C15, un groupement éthylenoxy ou un groupement aryle en C5 à C20 ou hétéroaryle, où les restes antérieurs peuvent être pour leur part substitués par un halogène,-OH, -CN,
X signifie un numbre entier valant 1, 2, 3, 4, 5, 6, 7, 8, 9 ou 10

et/ou de formule

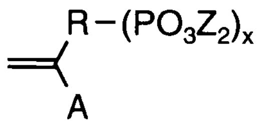

où

A signifie un groupement de formules $COOR^2$, CN, $CONR^2_2$, $OR^2$ et/ou $R^2$. où $R^2$ signifie de l'hydrogène, un groupement alkyle en C1 à C15, un groupement alkoxy en C1 à C15, un groupement éthylenoxy ou un groupement aryle en C5 à C20 ou hétéroaryle, où les restes antérieurs peuvent être pour leur part substitués par un halogène, -OH, COOZ, -CN, $NZ_2$.
R signifie une liaison, un groupement bivalent alkylène en C1 à C15, un groupement bivalent alkylenoxy en C1 à C15, par exemple un groupement éthylenoxy ou un groupement bivalent aryle en C5 à C20 ou hétéroaryle, où les restes antérieurs peuvent être pour leur part substitués par un halogène, -OH, COOZ, -CN, $NZ_2$.
Z signifie independamment l'un de l'autre de l'hydrogène, un groupement alkyle en C1 à C15, un groupement alkoxy en C1 à C15, un groupement éthylenoxy ou un groupement aryle en C5 à C20 ou hétéroaryle, où les restes antérieurs peuvent être pour leur part substitués par un halogène,-OH, -CN,
x signifie un numbre entier valant 1, 2, 3, 4, 5, 6, 7, 8, 9 ou 10.

7. Membrane selon la revendication 5 ou 6, **caractérisée en ce que** le rapport en poids de l'acide phosphonique contenant du vinyle à l'acide sulfonique contenant du vinyle est situé dans le domaine 1:100 à 99:1

8. Membrane selon la revendication 1, **caractérisée en ce que** le liquide comprenant l'acide sulfonique contenant du vinyle contient des monomères capables de réticulation.

9. Membrane selon la revendication 1, **caractérisée en ce que** le liquide comprenant l'acide sulfonique contenant du

vinyle contient au moins une substance capable de former des radicaux.

**10.** Membrane selon la revendication 1, **caractérisée en ce que** la polymérisation selon l'étape C) a lieu par irradiation à des radiations IR respectivement NIR, UV, β, γ et/ou d'electrons.

**11.** Membrane selon la revendication 1, **caractérisée en ce que** la membrane a une conductibilité propre d'au moins 0,001 S/cm.

**12.** Membrane selon la revendication 1, **caractérisée en ce que** la membrane contient entre 1 et 90 % en poids de polymère aussi bien que 99 et 0,5 % en poids de l'acide polyvinylsulfonique.

**13.** Membrane selon la revendication 1, **caractérisée en ce que** la membrane présente une couche contenant une composante active du point de vue catalytique.

**14.** Unité membrane-électrode contenant une électrode et au moins une membrane selon l'une ou plusieurs des revendications 1 à 13.

**15.** Cellule de combustion contenant une ou plusieurs unités membrane-électrode selon la revendication 14 et/ou une ou plusieurs membranes selon l'une des revendications 1 à 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3692569 A
- US 4453991 A
- US 5635041 A
- US 5422411 A
- US 5834523 A
- US 6110616 A
- EP 667983 A
- DE 19844645
- DE 4219077
- EP 9601177 A
- DE 19527435
- WO 0015691 A
- DE 19817374
- WO 0118894 A
- DE 4422158
- DE 19851498
- WO 9613872 A
- US 5525436 A
- DE 10117686
- DE 10144815
- DE 10117687
- WO 0118894 A2
- DE 10129458
- DE 10110752
- WO 0044816 A
- DE 10140147
- DE 10109829
- DE 19509748
- DE 19509749
- DE 19757492
- WO 0026982 A
- WO 9215121 A
- DE 10052237


### In der Beschreibung aufgeführte Nicht-Patentliteratur


- **F. KUCERA.** *Polymer Engineering and Science,* 1988, vol. 38 (5), 783-792
- *J. Membr. Sci.,* 1993, vol. 83, 211
- **K.-D. KREUER.** *Chem. Mater.,* 1996, vol. 8, 610-641
- *J. Electrochem. Soc.,* 1995, vol. 142 (7), L121-L123
- **N. J. BJERRUM.** *Journal of Applied Electrochemistry,* 2001, vol. 31, 773-779
- **GANG, XIAO ; HJULER, H. A. ; OLSEN, C. ; BERG, R. W. ; BJERRUM, N. J.** Electrolyte additives for phosphoric acid fuel cells. *Chem. Dep. A, Tech. Univ. Denmark, Lyngby, Den. J. Electrochem. Soc.,* 1993, vol. 140 (4), 896-902
- **RAZAQ, M. ; RAZAQ, A. ; YEAGER, E. ; DESMARTEAU, DARRYL D. ; SINGH, S.** Case Cent. Electrochem. Sci. *J. Electrochem. Soc.,* 1989, vol. 136 (2), 385-90
- **HANS JOERG ELIAS.** Makromolekulare Chemie. vol. 1, 492-511
- **D. R. ARNOLD ; N. C. BAIRD ; J. R. BOLTON ; J. C. D. BRAND ; P. W. M JACOBS ; P.DE MAYO ; W. R. WARE.** Photochemistry-An Introduction. Academic Press
- **M.K.MISHRA.** Radical Photopolymerization of Vinyl Monomers. *J. Macromol. Sci.-Revs. Macromol. Chem. Phys.,* 1982, vol. C22, 409
- **P. ZELENAY ; S.C. THOMAS ; S. GOTTESFELD ; S. GOTTESFELD ; T.F. FULLER.** Proton Conducting Membrane Fuel Cells II. *ECS Proc.,* vol. 98 (27), 300-308